(19) 

Europäisches
Patentamt
European
Patent Office
Office européen
des brevets

(11) **EP 4 129 532 A1**

(12) **EUROPEAN PATENT APPLICATION**
published in accordance with Art. 153(4) EPC

(43) Date of publication:
**08.02.2023  Bulletin 2023/06**

(21) Application number: **21781591.9**

(22) Date of filing: **03.03.2021**

(51) International Patent Classification (IPC):
**B22F 1/00** (1968.09)  **C22C 24/00** (1974.07)
**H01M 4/38** (1974.07)  **H01M 4/505** (2010.01)
**H01M 4/525** (2010.01)  **H01M 4/62** (1974.07)
**H01M 10/054** (2010.01)  **H01M 10/0562** (2010.01)

(52) Cooperative Patent Classification (CPC):
**B22F 1/12; C22C 24/00; H01M 4/38; H01M 4/505;**
**H01M 4/525; H01M 4/62; H01M 10/054;**
**H01M 10/0562;** Y02E 60/10

(86) International application number:
**PCT/JP2021/008062**

(87) International publication number:
**WO 2021/199860 (07.10.2021 Gazette 2021/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **31.03.2020  JP 2020062871**

(71) Applicants:
• **Sumitomo Chemical Company, Limited**
  **Tokyo 103-6020 (JP)**
• **Nagoya Institute Of Technology**
  **Nagoya-shi, Aichi 466-8555 (JP)**

(72) Inventors:
• **TANIBATA, Naoto**
  **Nagoya-shi, Aichi 466-8555 (JP)**
• **TAKEDA, Hayami**
  **Nagoya-shi, Aichi 466-8555 (JP)**
• **NAKAYAMA, Masanobu**
  **Nagoya-shi, Aichi 466-8555 (JP)**
• **KUZE Satoru**
  **Tsukuba-shi, Ibaraki 300-3294 (JP)**
• **TANAKA Hidenaka**
  **Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

(54) **ELECTRODE ACTIVE MATERIAL FOR SODIUM SECONDARY BATTERY, ELECTRODE MIXTURE FOR SODIUM SECONDARY BATTERY, ELECTRODE FOR SODIUM SECONDARY BATTERY, SODIUM SECONDARY BATTERY, AND ALL-SOLID-STATE SODIUM SECONDARY BATTERY**

(57)    There is provided an electrode active material for a sodium secondary battery, containing Na and $M^1$. Here, $M^1$ is one or more elements selected from the group consisting of Si, Ge, Sn, Pb, Sb, and Bi, and a molar ratio (Na:$M^1$) of Na to $M^1$ is t: 1, where t is a number of 2 or more and 3 or less.

EP 4 129 532 A1

**Description**

[Technical Field]

The present invention relates to an electrode active material for a sodium secondary battery, an electrode mixture agent for a sodium secondary battery, an electrode for a sodium secondary battery, a sodium secondary battery, and an all-solid state sodium secondary battery.

Priority is claimed on Japanese Patent Application No. 2020-062871, filed March 31, 2020, the content of which is incorporated herein by reference.

[Background Art]

Among secondary batteries, a lithium secondary battery has already been put to practical use as a small-sized power source of a cellular phone, a laptop computer, or the like. In addition, the lithium secondary battery can also be used as a large-scale power source such as a power source for a vehicle such as an electric vehicle or a hybrid vehicle, or a power source for a distribution type power storage. Due to these circumstances, the demand for the lithium secondary batteries is increasing.

However, a large amount of expensive metal elements such as lithium and cobalt are used in the production of materials that constitute the lithium secondary battery. In association with the increasing demand for large-scale power sources, there is concern about an insufficient supply of expensive metal elements such as lithium and cobalt.

On the other hand, a sodium secondary battery has been studied as a secondary battery that can solve the problem of the insufficient supply of metal elements. Sodium, which is more abundantly supplied and less expensive than lithium or cobalt, can be used as a constituent material of a sodium secondary battery.

By putting the sodium secondary battery into practical use, it is expected that a large number of large-scale power sources can be supplied without concerning about insufficient supply of raw materials.

As a sodium secondary battery in the related art, for example, Patent Document 1 discloses a sodium secondary battery using a sodium compound represented by the formula $Na_{0.7}MnO_{2+y}$ as a cathode active material and using a tin (Sn) single body as an anode active material.

In Patent Document 1, a solution obtained by adding sodium hexafluorophosphate as an electrolyte, at a proportion which gives a concentration of 1 mol/l, to a non-aqueous solvent in which ethylene carbonate and diethyl carbonate are mixed at a volume ratio of 50:50 as an electrolytic solution is used.

In addition, Patent Document 2 discloses a sodium secondary battery using, as a cathode active material, a mixture of a sodium sulfide and a sodium iodide represented by $75Na_2S\cdot25NaI$ and using, as an anode active material, a sodium tin alloy represented by the formula $Na_{15}Sn_4$.

In Patent Document 2, a mixture of a sodium sulfide and diphosphorus pentasulfide represented by 75NazS.25PzSs is used as an electrolyte.

[Citation List]

[Patent Documents]

[Patent Document 1]
Japanese Unexamined Patent Application, First Publication No. 2006-216508
[Patent Document 2]
PCT International Publication No. WO2016/063877

[Non-Patent Documents]

[Non-Patent Document 1]
Wang, J. W.; Liu, X.; H.; Mao, S. X.; Huang, J. Y., Microstructural Evolution of Tin Nanoparticles During In Situ Sodium Insertion and Extraction, Nano Lett. 2012, 12, 5897-5902.

[Summary of Invention]

[Technical Problem]

However, the sodium secondary battery disclosed in Patent Document 1 has a low initial battery voltage, and moreover, the discharge capacity after repeated charging and discharging is not sufficient.

In addition, in Patent Document 1, an Sn thin film is used as an anode active material, and the Sn thin film is deposited on a current collector. In this case, since the anode active material layer is thin, the ratio of the active material to the volume of the current collector is small. As described in Patent Document 1, in a case of using a sputtering device, it is also difficult to increase the thickness of the Sn film. Such an anode active material layer is not suitable for producing a battery having a large discharge capacity per volume.

Furthermore, Sn has a large volume change during charging and discharging. For example, Non-Patent Document 1 describes that Sn undergoes a large volume change as it is alloyed with Na.

When charging and discharging are repeated in a case where Sn is used as the anode active material, the current collector cannot respond to the volume change of the anode active material, and the Sn thin film, which is the anode active material, is detached from the electrode.

As a result, the amount of the anode active material that contributes to charging and discharging tends to decrease, which results in a decrease in the discharge capacity of the battery.

In addition, an electrode consisting of a thin film requires a large-scale sputtering device or the like, which requires vacuum equipment or the like, and thus the cost of the battery manufacturing equipment increases.

Furthermore, the sodium secondary battery disclosed in Patent Document 2 cannot be said to have sufficient discharge capacity, for example, after repeated charging and discharging. In addition, there is a large room for improvement in terms of lengthening battery service life.

In a case where charging and discharging of a sodium secondary battery using a sodium tin alloy represented by the formula $Na_{15}Sn_4$ described in Patent Document 2 as an anode active material are repeated, the volume change of the anode active material increases since charging and discharging are carried out by precipitation and dissolution of Na. In this case, the current collector cannot respond to the volume change of the anode active material, and the anode active material is detached from the electrode current collector. As a result, the amount of the anode active material that can contribute to charging and discharging decreases, and the discharge capacity tends to decrease.

In addition, the metallic Na precipitated during charging also causes an internal short circuit in the battery, which tends to shorten the battery service life.

Under such circumstances, an object of the present invention is to provide an electrode active material for a sodium secondary battery, an electrode mixture agent for a sodium secondary battery, an electrode for a sodium secondary battery, a sodium secondary battery, and an all-solid state sodium secondary battery, where in the sodium secondary battery, the initial battery voltage is high and the discharge capacity hardly decreases even in a case where charging and discharging are repeated.

[Solution to Problem]

The present invention includes the following [1] to [16].

[1] An electrode active material for a sodium secondary battery, containing:

Na; and
M1,
in which $M^1$ is one or more elements selected from the group consisting of Si, Ge, Sn, Pb, Sb, and Bi, and
a molar ratio ($Na:M^1$) of Na to $M^1$ is t: 1, where t is a number of 2 or more and 3 or less.

[2] The electrode active material for a sodium secondary battery according to [1], in which $M^1$ includes at least Sn.
[3] The electrode active material for a sodium secondary battery according to [2], in which t is a number of 2 or more and 2.5 or less.
[4] The electrode active material for a sodium secondary battery according to [2] or [3], in which the electrode active material for a sodium secondary battery has a peak in a range of $2\theta = 38°$ or more and $39°$ or less in a powder X-ray diffraction measurement using a CuKa ray.
[5] An electrode mixture agent for a sodium secondary battery, containing:

the electrode active material for a sodium secondary battery according to any one of [1] to [4]; and
an electrode forming agent.

[6] The electrode mixture agent for a sodium secondary battery according to [5], in which the electrode mixture agent for a sodium secondary battery contains a carbon material.

[7] An electrode for a sodium secondary battery, containing the electrode active material for a sodium secondary battery according to any one of [1] to [4].

[8] An electrode for a sodium secondary battery, containing:
the electrode mixture agent for a sodium secondary battery according to [5] or [6].

[9] A sodium secondary battery including:

a first electrode;
a second electrode; and
a non-aqueous electrolytic solution,
in which the first electrode is the electrode according to [7] or [8], and
the second electrode is an electrode containing, as an electrode active material, a sodium compound that enables doping and dedoping of metallic sodium, a sodium alloy, or a sodium ion.

[10] The sodium secondary battery according to [9], in which the sodium compound is an electrode active material consisting of an inorganic sodium compound.

[11] The sodium secondary battery according to [10], in which the inorganic sodium compound is an oxide represented by Formula (A),

$$Na_xMO_2 \qquad (A)$$

(in formula (A), M is one or more elements selected from the group consisting of Fe, Ni, Co, Mn, Cr, V, Ti, B, Al, Mg, and Si, and x is a numberr of more than 0 and 1.2 or less).

[12] The electrode active material for a sodium secondary battery according to any one of [1] to [4], in which the electrode active material for a sodium secondary battery is an anode active material for an all-solid state sodium secondary battery.

[13] An all-solid state sodium secondary battery including:

a cathode;
an anode; and
a solid electrolyte layer sandwiched between the cathode and the anode,
in which the solid electrolyte layer contains a first solid electrolyte,
the anode has an anode active material layer in contact with the solid electrolyte layer and a current collector on which the anode active material layer is laminated, and
the anode active material layer contains the electrode active material for a sodium secondary battery according to [12].

[14] The all-solid state sodium secondary battery according to [13], in which the anode active material layer contains a second solid electrolyte.

[15] The all-solid state sodium secondary battery according to [14], in which the first solid electrolyte and the second solid electrolyte are the same material.

[16] The all-solid state sodium secondary battery according to any one of [13] to [15], in which the first solid electrolyte is a NASICON type solid electrolyte.

[Advantageous Effects of Invention]

According to the present invention, it is possible to provide an electrode active material for a sodium secondary battery, an electrode mixture agent for a sodium secondary battery, an electrode for a sodium secondary battery, a sodium secondary battery, an electrode active material for a sodium secondary battery, and an all-solid state sodium secondary battery, where in the sodium secondary battery, the initial battery voltage is high, the using amount of rare metals can be reduced, and the discharge capacity hardly decreases even in a case where charging and discharging are repeated.

[Brief Description of Drawings]

FIG. 1 is a schematic view showing a laminate included in an all-solid state sodium secondary battery according to an embodiment.

FIG. 2 is a schematic view showing an overall configuration of the all-solid state sodium secondary battery according to an embodiment.

FIG. 3 is a graph showing the results of XDR measurements of electrode active materials for a secondary battery, manufactured in Examples and Comparative Examples.

[Description of Embodiments]

<Electrode Active Material for Sodium Secondary Battery>

An electrode active material for a sodium secondary battery according to the present embodiment contains Na and $M^1$.

In the present embodiment, $M^1$ is one or more elements selected from the group consisting of Si, Ge, Sn, Pb, Sb, and Bi.

In the present embodiment, the molar ratio of Na to $M^1$ (Na:$M^1$) is t:1. Here, t is a number of 2 or more and 3 or less.

Hereinafter, the "electrode active material for a sodium secondary battery" may be referred to as the "electrode active material".

The electrode active material according to the present embodiment contains an amount of a specific molar ratio of the element $M^1$. The element $M^1$ is an element that absorbs and releases more Na ions than other elements. Therefore, the discharge capacity per mass can be increased as compared with, for example, carbon-based electrode active materials in the related art.

In addition, Na as an electrode active material undergoes a large volume change in association with the absorption and release of Na ions. However, in a case where the element $M^1$ is contained, a large volume change, which is problematic in a case where Na is used alone, hardly occurs in the electrode active material according to the present embodiment. As a result, in the electrode active material according to the present embodiment, a volume change in association with charging and discharging hardly occurs, and the electrode active material layer is hardly detached from the electrode current collector.

The electrode active material may be a cathode active material or may be an anode active material. In the present embodiment, the electrode active material is preferably an anode active material.

For example, in a case where a sodium compound that enables doping and dedoping of metallic sodium, a sodium alloy, or a sodium ion is used as a counter electrode, the electrode active material in the present embodiment is the anode active material.

From the viewpoint of enabling detachment and insertion of a large number of sodium ions and further increasing the energy density, t preferably exceeds 2 and is more preferably 2.1 or more.

In addition, from the viewpoint of increasing the discharge capacity, t is preferably less than 3 and more preferably 2.5 or less. Any combination of the upper limit value and the lower limit value of t can be adopted.

Examples of the combination thereof include a combination in which t is more than 2 and less than 3, a combination in which t is 2 or more and 2.5 or less, and a combination in which t is 2.1 or more and 2.5 or less. In a case where $M^1$ consists only of Sn, t preferably satisfies 2 or more and 2.5 or less.

An electrode active material for a sodium secondary battery, containing Na and Sn, can incorporate sodium ions up to a maximum compositional ratio of $Na_{15}Sn_4$. At the time of full charge ($Na_{15}Sn_4$), the volume of the electrode active material greatly expands. For example, the volume expansion rate of the Na-Sn-based electrode active material layer at the time of full charge is about 480% with respect to an Sn single layer. In a case where the volume expansion rate is too high, the current collector cannot respond to the volume change of the anode active material, and the anode active material layer is detached from the electrode current collector when charging and discharging are repeated.

The electrode active material according to the present embodiment has a volume expansion rate of about 100% to 160% at the time of full charge ($Na_{15}Sn_4$) with respect to the initial charge. Therefore, even in a case where charging and discharging are repeated, the amount of change in the volume of the anode active material is small as compared with a case of using an Sn single layer, the anode active material is hardly detached from the electrode current collector, and the electrode is hardly broken. As a result, the service life of the battery can be lengthened.

Since the electrode active material having the above composition has a high melting point as compared with a Na single body, it is possible to manufacture a battery that operates stably even in a high-temperature environment. The melting point of the Na single body is 97.79°C, whereas, for example, the melting point of $Na_9Sn_4$ is about 450°C (see W. Hume-Rothery, J. Chem. Soc., 47, (1928)).

The electrode active material having the above composition is more flexible than the carbon powders in the related art, which have been used as the anode active material. Such an electrode active material easily forms an interface with, for example, a solid electrolyte, and it can reduce interfacial resistance in the electrode. As a result, sodium ion conductivity is improved, and it is possible to manufacture a battery stable even in a case where charging and discharging are carried out at a high rate.

The composition of the electrode active material can be checked by carrying out a composition analysis using an inductively coupled plasma emission analysis apparatus.

As the inductively coupled plasma emission analysis apparatus, it is possible to use, for example, SPS3000 manufactured by SII NanoTechnology Inc. can be used.

In the present embodiment, in a case where diffracted X-rays derived from the fact that the plane spacing is more than 2.30 Å and less than 2.35 Å is observed in a powder X-ray diffraction measurement of the electrode active material using CuK$\alpha$ rays, it can be determined that $M^1$ includes only Sn.

In a case where $M^1$ contains at least Sn, the electrode active material according to the present embodiment preferably has a peak in a range of $2\theta = 38°$ or more and $39°$ or less in a powder X-ray diffraction measurement using CuK$\alpha$ rays.

The crystal structure of the electrode active material can be measured using a powder X-ray diffraction measurement device. As the powder X-ray diffraction measurement device, it is possible to use, for example, a powder X-ray diffraction measurement device RINT2500TTR manufactured by Rigaku Corporation. An example of measurement conditions is shown below.

X-ray: CuK$\alpha$
Voltage - current: 40 kV - 140 mA
Measurement angle range: $2\theta = 10°$ to $90°$
Step: $0.02°$
Scan speed: $4°$/min

The electrode active material according to the present embodiment may be a mixed powder of Na and $M^1$, where Na and $M^1$ may form a laminate, or it may be an alloy of Na and $M^1$. The electrode active material according to the present embodiment is preferably an alloy of Na and $M^1$.

The electrode active material for a sodium secondary battery, containing Na and $M^1$, is exemplified by the examples below.

$\cdot\cdot Na_8Sn_4$, $Na_9Sn_4$, $Na_{10}Sn_4$, or $Na_{12}Sn_4$
$\cdot\cdot Na_8Ge_4$, $Na_9Ge_4$, $Na_{10}Ge_4$, or $Na_{12}Ge_4$
$\cdot\cdot Na_8Si_4$, $Na_9Si_4$, $Na_{10}Si_4$, or $Na_{12}Si_4$
$\cdot\cdot Na_8Pb_4$, $Na_9Pb_4$, $Na_{10}Pb_4$, or $Na_{12}Pb_4$
$\cdot\cdot Na_8Sb_4$, $Na_9Sb_4$, $Na_{10}Sb_4$, or $Na_{12}Sb_4$
$\cdot\cdot Na_8Bi_4$, $Na_9Bi_4$, $Na_{10}Bi_4$, or $Na_{12}Bi_4$

Among the above, $Na_8Sn_4$, $Na_9Sn_4$, $Na_{10}Sn_4$, or $Na_{12}Sn_4$ is preferable, and $Na_{10}Sn_4$ is more preferable.

(Diffusion Coefficient of Sodium Atom)

In the electrode active material for a sodium secondary battery according to the present embodiment, the diffusion coefficient of the sodium atom is higher than that of a Na alloy in the related art represented by, for example, the formula $Na_{15}Sn_4$. Here, the "diffusion coefficient of the sodium atom" is an indicator that indicates the amount of movement of sodium ions per unit time in a sodium alloy.

A high diffusion coefficient of the sodium atom means that sodium ions can move smoothly in the sodium alloy. In a case of using an electrode active material for a sodium secondary battery, in which the diffusion coefficient of the sodium atom is high, it is possible to provide a sodium secondary battery having high charging and discharging speeds. Such a sodium secondary battery has good charging and discharging efficiency and tends to have a long service life.

The diffusion coefficient of sodium ions can be computed from computer simulation for an anode active material for a sodium secondary battery.

The computer simulation makes it possible to determine the amount of movement of sodium atoms per unit time in the anode active material for a sodium secondary battery. Furthermore, from the mean square displacement thereof, it is possible to determine the diffusion coefficient of the sodium atom.

For the computer simulation, a VASP5.4 program package manufactured by VASP Software GmbH, which is one of the first-principles molecular dynamics (MD) methods, can be suitably used.

The initial coordinates of the sodium atom and the element $M^1$, which are the initial conditions for being input into the computer, are specified using the crystal structure determined from the results of the X-ray diffraction measurement.

In carrying out the simulation in the present embodiment, the following computing conditions are adopted in order to reproduce the tendencies of the actual measurements.

Computational model: $2 \times 2 \times 2$ cells, with each axis of the unit lattice being expanded twice.

Temperature: 298 K and 673 K
Reproduction time: 50 picoseconds (50,000 steps)
Energy cutoff: 350 eV

Computation of interaction between particles: Density functional theory computation.

[Calculation of Diffusion Coefficient of Sodium Atom by Computer Simulation]

First, it is known that in a where the moving distance of a substance is denoted by r, r is expressed as Expression 1 according to the relational expression between the mean square displacement and the time in three-dimensional Brownian motion.

$$r = \sqrt{(6Dt)} \quad \cdots \text{Expression 1}$$

(In Expression 1, r is the moving distance (unit: cm) of a substance, D is the diffusion coefficient (unit: $cm^2/s$), and t is the elapsed time (seconds))

According to the above computer simulation, the moving distance r of the sodium atom is calculated as r.

After elapse of t steps, a sodium ion at coordinates of a randomly selected starting point moves to coordinates after the elapse of t steps. Here, "after elapse of t steps" means "after elapse of 50,000 steps" which is the condition described in the reproduction time, and it means after 50 picoseconds in actual time.

"((Coordinates after elapse of t steps) - (initial coordinates))" indicates the moving distance r. Regarding the moving distance r, $\Sigma r$, which is the sum of the moving distances r, is the amount of movement of sodium ions for all particles in a case of assuming that there are a plurality of particles.

In a case of converting Expression 1 and substituting $\Sigma r$ determined from computer simulation into the converted Expression 1, the following Expression (D0) is obtained. The diffusion coefficient 1 calculated from Expression (D0) is a diffusion coefficient of particles as a whole.

$$\text{(Diffusion coefficient 1)} = \{\{\Sigma((\text{coordinates after elapse of t steps}) - (\text{initial coordinates}))^2\}\}/\text{elapsed time (number of steps)}/6 \quad \cdots \text{(D0)}$$

In a case of dividing $\{\Sigma((\text{coordinates after elapse of t steps}) - (\text{initial coordinates}))^2\}$ in Expression (D0) by the number of particles, the following Expression (D) is obtained. The diffusion coefficient calculated from Expression (D) is a diffusion coefficient of a sodium ion per particle.

$$\text{(Diffusion coefficient)} = \{\{\Sigma((\text{coordinates after elapse of t steps}) - (\text{initial coordinates}))^2\}/\text{number of particles}\}/\text{elapsed time (number of steps)}/6 \quad \cdots \text{(D)}$$

Here, the number of particles is, for example, the number of sodium atoms in the above computational model.

In a case of a temperature condition of 298 K, it is evaluated as "the diffusion coefficient is high" in a case where the diffusion coefficient calculated from the above Expression (D) is $0.5 \times 10^{-6}$ ($cm^2/s$) or more.

298 K, that is, about 25°C is the room temperature at which the operation of the sodium secondary battery is assumed. The fact that the diffusion coefficient satisfies the above range at such a temperature means that sodium ions can move smoothly at the temperature at which the operation of the sodium secondary battery is assumed.

In a case of a temperature condition of 673 K, it is evaluated as "the diffusion coefficient is high" in a case where the diffusion coefficient calculated from the above Expression (D) is $2.6 \times 10^{-6}$ ($cm^2/s$) or more.

673 K, that is, about 400°C, is the temperature at which alloying of Na with M[1] is assumed. In a case where the diffusion coefficient satisfies the above range at such a temperature, alloying can be carried out at a high temperature, and thus alloying can be carried out in a short time and the energy required for manufacturing can be saved.

<Production Method for Electrode Active Material for Sodium Secondary Battery>>

A production method for the electrode active material according to the present embodiment will be described.

[Production Method for Alloy of Na and $M^1$]

In a case where the electrode active material according to the present embodiment is an alloy of Na and $M^1$, Na and $M^1$ are preferably subjected to a mechanical alloying treatment to produce the alloy thereof.

Specifically, first, a Na powder and an $M^1$ powder are mixed at a proportion where the molar ratio (Na:$M^1$) satisfies t:1 (t is a number of 2 or more and 3 or less) to obtain a mixed powder. Regarding the mixing ratio in the mixed powder, in a case where the mixing is carried out at a proportion where the molar ratio (Na:$M^1$) satisfies t: 1 (t is a number of 2 or more and 3 or less), an electrode active material for a sodium secondary battery, which satisfies the above composition, can be manufactured.

Next, a mechanical alloying treatment is carried out, that is, the obtained mixed powder is set in a ball mill together with a pulverization medium and rotated, whereby the pulverization medium pressurizes the mixed powder, and spreading is repeated to obtain an alloy powder.

As the ball mill, it is possible to use, for example, a planetary ball mill device.

As the pulverization medium, it is possible to use a ceramic ball or a zirconia ball. As this pulverization medium, it is possible to use those having a diameter of, for example, 5 mm to 10 mm.

Regarding the conditions for the mechanical alloying treatment, it suffices that, the treatment is carried out, for example, under the conditions of room temperature, 100 to 1,000 rpm, and 5 to 10 minutes.

In addition, it is preferable to carry out the mechanical alloying treatment in an inert atmosphere. The inert atmosphere includes an argon atmosphere or a nitrogen atmosphere.

[Production Method for Mixed Powder of Na and $M^1$]

In a case where the electrode active material according to the present embodiment is a mixed powder of Na and $M^1$, a Na powder and an $M^1$ powder are mixed at a proportion where the molar ratio (Na:$M^1$) satisfies t:1 (t is a number of 2 or more and 3 or less), whereby the mixed powder can be produced.

[Na]

The shape of a Na raw material that is used in the present embodiment may be any one of a powder shape, a granule shape, an ingot shape, or a thin film shape. Among the above, the Na raw material preferably has a powder shape.

Examples of the shape of the particles constituting the Na powder include a flake shape, a spherical shape, a fiber shape, and a shape of an aggregate of Na fine particles.

[$M^1$]

$M^1$ is an element other than Na, and it is one or more elements selected from the group consisting of Si, Ge, Sn, Pb, Sb, and Bi.

In order to suppress a decrease in discharge capacity in a case where charging and discharging are repeated, $M^1$ preferably contains at least Sn.

In addition, $M^1$ preferably contains only Sn.

The shape of an $M^1$ raw material may be any one of a powder shape, a granule shape, an ingot shape, or a thin film shape.

In a case where the element $M^1$ includes only Sn, the shape of the Sn raw material may be any one of a powder shape, a granule shape, an ingot shape, or a thin film shape. Among the above, Sn preferably has a powder shape.

Examples of the powder-shaped Sn include the following commercially available products.

··Sn powder manufactured by FUJIFILM Wako Pure Chemical Corporation (particle diameter: 45 μm, purity: 99.5%).
··Sn powder manufactured by Kojundo Chemical Lab. Co., Ltd. (particle diameter: less than 38 μm, purity: 99.99%).
··Sn powder manufactured by Kanto Chemical Co., Inc. (particle diameter: 45 μm).
··Sn powder from Merck KGaA (particle diameter: less than 71 μm).
··Sn powder manufactured by Nilaco Corporation (particle diameter: 150 μm, purity: 99.999%).
··Sn powder manufactured by Sigma-Aldrich Co., LLC (particle diameter: 150 nm or less, purity: 99.7%).

Among the above, it is preferably an Sn powder manufactured by Sigma-Aldrich Co., LLC, where the Sn powder has a particle diameter of 45 μm or less.

Examples of the shape of the particles constituting the Sn powder include a flake shape, a spherical shape, a fiber shape, and a shape of aggregates of fine particles.

The average particle diameter of particles constituting the Sn powder is preferably 0.01 μm or more and 30 μm or less, and it is more preferably 0.05 μm or more and 5 μm or less.

The particle diameter of the Sn powder particle is the maximum width of the particle. The average particle diameter of the Sn powder can be obtained by randomly extracting 100 particles in each visual field of 5,000 magnifications with a scanning electron microscope (SEM), measuring the particle diameters (in terms of diameter) of the individual particles to calculate the average value of 100 particle diameters.

It is noted that partial oxidation of the surface of the electrode active material that inevitably occurs in the production process of the electrode active material is allowed as long as the effect of the present invention is not impaired.

<Electrode Mixture Agent for Sodium Secondary Battery>

The present embodiment is an electrode mixture agent for a sodium secondary battery, containing the electrode active material according to the present embodiment described above and an electrode forming agent.

The electrode forming agent includes a binding agent and styrene-butadiene rubber. The binding agent acts as a binder that adheres another electrode constituent material. In a case of adding styrene-butadiene rubber, it is possible to impart flexibility to the electrode for a sodium secondary battery. As the binding agent, it is possible to use, for example, an organic polymer compound.

Examples of the organic polymer compound as the binding agent include a polymer of a fluorine compound.

Examples of the fluorine compound include a fluorinated alkyl (meth)acrylate having 1 to 18 carbon atoms, a perfluoroalkyl (meth)acrylate, a perfluoroalkyl-substituted alkyl (meth)acrylate, and a perfluorooxyalkyl (meth)acrylate.

In addition, examples of the binding agent include a fluorinated alkyl crotonate having 1 to 18 carbon atoms, a fluorinated alkyl maleate having 1 to 18 carbon atoms, a fluorinated alkyl fumarate having 1 to 18 carbon atoms, and a fluorinated alkyl itaconate having 1 to 18 carbon atoms.

In addition, examples of the binding agents include a fluorinated alkylsubstituted olefin having about 2 to 10 carbon atoms and about 1 to 17 fluorine atoms, a perfluorohexyl ethylene having about 2 to 10 carbon atoms, a fluorinated olefin having about 1 to 20 fluorine atoms, in which a fluorine atom is bonded to a double-bonded carbon, tetrafluoroethylene, trifluoroethylene, and hexafluoropropylene.

Examples of the perfluoroalkyl (meth)acrylate include perfluorododecyl (meth)acrylate, perfluoro n-octyl (meth)acrylate, and perfluoro n-butyl (meth)acrylate.

Examples of the perfluoroalkyl-substituted alkyl (meth)acrylate include perfluorohexyl ethyl (meth)acrylate and perfluorooctyl ethyl (meth)acrylate.

Examples of the perfluorooxyalkyl (meth)acrylate include perfluorododecyl oxyethyl (meth)acrylate and perfluorodecyl oxyethyl (meth)acrylate.

Other examples of the binding agent include addition polymers of the following monomers 1 to 13, containing ethylenic double bonds which do not contain a fluorine atom.

(Monomer 1)

Examples of the monomer 1 include a (cyclo)alkyl (meth)acrylate having 1 to 22 carbon atoms.

Specific examples the monomer 1 include methyl (meth)acrylate, ethyl (meth)acrylate, n-butyl (meth)acrylate, iso-butyl (meth)acrylate, cyclohexyl (meth)acrylate, 2-ethylhexyl (meth)acrylate, isodecyl (meth)acrylate, lauryl (meth)acrylate, and octadecyl (meth)acrylate.

(Monomer 2)

Examples of the monomer 2 include an aromatic ring-containing (meth)acrylate.

Specific examples of the monomer 2 include benzyl (meth)acrylate and phenylethyl (meth)acrylate.

(Monomer 3)

Examples of the monomer 3 include a mono(meth)acrylate of an alkylene glycol and a mono(meth)acrylate of a dialkylene glycol (here, the alkylene group has 2 to 4 carbon atoms).

Specific examples of the monomer 3 include 2-hydroxyethyl (meth)acrylate, 2-hydroxypropyl (meth)acrylate, and diethylene glycol mono(meth)acrylate.

(Monomer 4)

Examples of the monomer 4 include a (poly)glycerin (polymerization degree: 1 to 4) mono(meth)acrylate.

(Monomer 5)

Examples of the monomer 5 include a polyfunctional (meth)acrylate.
Examples of the monomer 5 include a (meth)acrylic acid ester-based monomer, (meth)acrylamide, a (meth)acrylamide-based derivative, and a (meth)acrylamide-based monomer.

(Monomer 5-1)

Examples of the (meth)acrylic acid ester-based monomer include (poly)ethylene glycol (polymerization degree: 1 to 100) di(meth)acrylate, (poly)propylene glycol (polymerization degree: 1 to 100) di(meth)acrylate, 2,2-bis(4-hydroxyethylphenyl)propane di(meth)acrylate, and trimethylolpropane tri(meth)acrylate.

(Monomer 5-2)

Examples of the (meth)acrylamide derivatives include N-methylol (meth)acrylamide and diacetone acrylamide.

(Monomer 5-3)

Examples of the (meth)acrylamide-based monomer include cyano group-containing monomers such as (meth)acrylonitrile, 2-cyanoethyl (meth)acrylate, and 2-cyanoethyl acrylamide.

(Monomer 6)

Examples of the monomer 6 include styrene and a styrene derivative having 7 to 18 carbon atoms.
Specific examples of the monomer 6 include α-methylstyrene, vinyl toluene, p-hydroxystyrene, divinyl benzene.

(Monomer 7)

Examples of the monomer 7 include an alkadiene having 4 to 12 carbon atoms.
Specific examples of the monomer 7 include butadiene, isoprene, and chloroprene.

(Monomer 8)

Examples of the monomer 8 include a carboxylic acid (having 2 to 12 carbon atoms) vinyl ester.
Specific examples of the monomer 8 include vinyl acetate, vinyl propionate, vinyl butyrate, and vinyl octanoate.

(Monomer 9)

Examples of the monomer 9 include a carboxylic acid (having 2 to 12 carbon atoms) (meth)allyl ester.
Specific examples pf the monomer 9 include (meth)allyl acetate, (meth)allyl propionate, and (meth)allyl octanoate, and the like].

(Monomer 10)

Examples of the monomer 10 include epoxy group-containing monomers such as glycidyl (meth)acrylate and (meth)allyl glycidyl ether.

(Monomer 11)

Examples of the monomer 11 include a monoolefin having 2 to 12 carbon atoms.
Specific examples of the monomer 11 include ethylene, propylene, 1-butene, 1-octene, and 1-dodecene.

(Monomer 12)

Examples of the monomer 12 include a chlorine atom-containing monomer, a bromine atom-containing monomer, and an iodine atom-containing monomer.

In addition, other examples of the monomer 12 include a monomer containing a halogen atom other than fluorine, such as vinyl chloride or vinylidene chloride.

In addition, other examples of the monomer 12 include (meth)acrylic acid such as acrylic acid and methacrylic acid.

Further, other examples of the monomer 12 include conjugated double bond-containing monomers such as butadiene and isoprene.

In addition, the addition polymer may be, for example, a copolymer such as an ethylene-vinyl acetate copolymer, a styrene-butadiene copolymer, or an ethylene-propylene copolymer.

In addition, the carboxylic acid vinyl ester polymer may be partially or completely saponified like the polyvinyl alcohol.

Further, the monomer 12 may be a copolymer of a fluorine compound and a monomer containing an ethylenic double bond which does not contain a fluorine atom.

Other examples of the binding agent include polysaccharides such as starch, methyl cellulose, hydroxymethyl cellulose, hydroxyethyl cellulose, hydroxypropyl cellulose, carboxymethylhydroxyethyl cellulose, and nitrocellulose, as well as derivatives of the polysaccharides.

In addition, other examples of the binding agent include a phenol resin, a melamine resin, a polyurethane resin, a urea resin, a polyamide resin, a polyimide resin, a polyamide-imide resin, a petroleum pitch, and a coal pitch.

One kind of binding agent may be used alone, or two or more kinds thereof may be used in combination.

In the electrode mixture agent for a sodium secondary battery according to the present embodiment, the binding agent preferably contains one or more selected from the group consisting of polyvinylidene fluoride (PVdF), polyacrylic acid (PAA), sodium polyacrylate (PAANa), and carboxymethyl cellulose (CMC).

The electrode mixture agent for a sodium secondary battery according to the present embodiment preferably contains a carbon material.

In a case of containing a carbon material, it is possible to improve the electrode performance.

Examples of the carbon material include a graphite powder, carbon black (for example, acetylene black, Ketjen black, furnace black, and the like), a fiber-shaped carbon material (carbon nanotubes, carbon nanofiber, vapor-grown carbon fiber).

<<Production Method for Electrode Mixture Agent for Sodium Secondary Battery>>

The electrode mixture agent for a sodium secondary battery can be produced by mixing an electrode active material for a sodium secondary battery, an electrode forming agent, and a carbon material as a conductive material.

The blending amount of the electrode forming agent in the electrode mixture agent for a sodium secondary battery is, for example, 0.01 parts by mass or more and 50 parts by mass or less, and 0.1 parts by mass or more and 15 parts by mass or less, with respect to 100 parts by mass of the total amount of the electrode active material.

Examples of the blending amount of the carbon material in the electrode mixture agent for a sodium secondary battery include 5 parts by mass or more and 600 parts by mass or less, and 30 parts by mass or more and 60 parts by mass or less, with respect to 100 parts by mass of the total amount of the electrode active material.

<Electrode for Sodium Secondary Battery>

The present embodiment is an electrode for a sodium secondary battery, containing the electrode active material for a sodium secondary battery according to the present embodiment described above.

In addition, the present embodiment is an electrode for a sodium secondary battery, containing the electrode mixture agent for a sodium secondary battery according to the present embodiment described above.

The electrode for a sodium secondary battery according to the present embodiment may contain another constituent material as necessary. Examples of the other constituent material include a current collector and a conductive material.

[Current Collector]

Examples of the material of the current collector include metals such as nickel, aluminum, titanium, copper, gold, silver, platinum, an aluminum alloy, and stainless steel.

In addition, examples thereof include a carbon material, activated carbon fiber, and those obtained by subjecting nickel, aluminum, zinc, copper, tin, lead, or an alloy thereof to plasma thermal spraying or arc thermal spraying.

Further examples thereof include a conductive film obtained by dispersing a conductive material in rubber or a resin such as a styrene-ethylene-butylene-styrene copolymer (SEBS).

Examples of the shape of the current collector include those such as a foil shape, a flat plate shape, a mesh shape, a net shape, a lath shape, a punched shape, and an embossed shape, as well as a combination thereof (for example, a mesh-shaped flat plate). Protrusions and recessions may be formed by an etching treatment on the surface of the current collector.

[Electrode Mixture Agent]

Examples of the electrode mixture agent include the above-described binding agent.

[Conductive Material]

A conductive material is used to enhance conductivity in the electrode. It is noted that in some cases, the carbon material also serves as a conductive material.

The conductive material includes a carbon material.

Specific examples of the carbon material include a graphite powder, carbon black, and a fiber-shaped carbon material.

Examples of the carbon black include acetylene black, Ketjen black, and furnace black.

Examples of the fiber-shaped carbon material include carbon nanotubes, carbon nanofiber, and vapor-grown carbon fiber.

The carbon black has fine particles and thus has a large surface area. Therefore, in a case where a small amount thereof is added to the electrode mixture agent, the conductivity inside the electrode to be obtained can be enhanced. This makes it possible to improve the charging and discharging efficiency and large-current discharge characteristics of the battery.

The charging and discharging efficiency means the capacity ratio in which the charge capacity is the denominator and the discharge capacity is the numerator.

The large-current discharge characteristics refer to characteristics in which a voltage drop hardly occurs even in a case where discharging is carried out at a large current with respect to the battery capacity.

<<Manufacturing Method for Electrode for Sodium Secondary Battery>>

Hereinafter, a manufacturing method for the electrode for a sodium secondary battery according to the present embodiment will be described.

In the electrode for a sodium secondary battery according to the present embodiment, the electrode active material according to the present embodiment described above is supported on a current collector. The shape of the electrode for a sodium secondary battery is a pellet shape or a sheet shape.

In a case where the electrode has a sheet shape, the thickness of the sheet is, for example, 5 μm or more and 500 μm or less.

The electrode for a sodium secondary battery can be manufactured according to the following method.

(Manufacturing Method 1 for Electrode for Sodium Secondary Battery)

First, a mixture containing the electrode active material according to the present embodiment described above, the above-described electrode forming agent, and a carbon material as an optional conductive material is produced. A solvent is added to the obtained mixture to produce an electrode mixture agent paste.

The obtained electrode mixture agent paste is applied onto a current collector and dried to obtain an electrode for a sodium secondary battery.

In the present embodiment, an electrode for a sodium secondary battery may be obtained by immersing a current collector in the obtained electrode mixture agent paste, applying the electrode mixture agent paste onto the current collector, and then drying the current collector.

(Manufacturing Method 2 for Electrode for Sodium Secondary Battery)

First, a mixture containing the electrode active material according to the present embodiment described above, the above-described electrode forming agent, an optional carbon material, and an optional conductive material is produced.

A solvent is added to the obtained mixture, the resultant mixture is kneaded, molded into a sheet shape, and dried to obtain a sheet-shaped electrode mixture agent.

Next, the obtained electrode mixture agent is bonded on the surface of the current collector with a conductive adhesive agent or the like being sandwiched.

Then, pressing is carried out, and further, heating is carried out to carry out drying, thereby obtaining an electrode for a sodium secondary battery.

(Manufacturing Method 3 for Electrode for Sodium Secondary Battery)

First, a mixture containing the electrode active material according to the present embodiment described above, the above-described electrode forming agent, a liquid lubricant, an optional carbon material, and an optional conductive material is produced.

Next, the obtained mixture is formed into a sheet shape on a current collector.

Then, the liquid lubricant is removed by heating and drying.

As a result, a molded product formed into a sheet shape is obtained. The obtained molded product is subjected to a stretching treatment together with the current collector in a monoaxial direction or a multiaxial direction, thereby obtaining a sheet-shaped electrode for a sodium secondary battery.

As the liquid lubricant that is used in the preparation of the electrode mixture agent paste, it is possible to use, for example, aprotonic polar solvents such as water and N-methylpyrrolidone; alcohols such as isopropyl alcohol, ethyl alcohol, and methyl alcohol; ethers such as propylene glycol dimethyl ether; and ketones such as acetone, methyl ethyl ketone, and methyl isobutyl ketone.

In a case where a binding agent thickens, a plasticizer may be used to facilitate the application onto the current collector.

The method of applying the electrode mixture agent paste onto the current collector is not particularly limited.

Examples thereof include a doctor blade method, a slit die coating method, a screen coating method, a curtain coating method, a knife coating method, a gravure coating method, and an electrostatic spray method.

Examples of the drying method that is carried out after coating include drying by a heat treatment, air blow drying, and vacuum drying.

In a case where drying is carried out by a heat treatment, the temperature is, for example, 50°C or higher and 150°C or lower.

In addition, pressing may be carried out after drying. Examples of the pressing method include methods such as die pressing and roll pressing.

According to the method described above, it is possible to manufacture the electrode for a sodium secondary battery according to the present invention.

<Sodium Secondary Battery>

Next, the sodium secondary battery according to the present embodiment will be described.

The sodium secondary battery according to the present embodiment is a sodium secondary battery having a first electrode, a second electrode, and a non-aqueous electrolytic solution.

In the present embodiment, the first electrode is the electrode for a sodium secondary battery according to the present embodiment.

In the present embodiment, the second electrode is an electrode containing, as an electrode active material, a sodium compound that enables doping and dedoping of metallic sodium, a sodium alloy, or a sodium ion.

It is noted that in general, the sodium secondary battery according to the present embodiment further has a separator.

The sodium secondary battery according to the present embodiment has an electrode group obtained by laminating and winding the first electrode, a separator, and the second electrode. This electrode group is manufactured by being housed in a container such as a battery can and being impregnated with an electrolytic solution containing an electrolyte. The shape of the sodium secondary battery includes a coin shape, a cylindrical shape, a rectangular shape, and the like, depending on the shape of the container.

Each component of the sodium secondary battery according to the present invention will be described below.

[First Electrode]

For the first electrode, the electrode for a sodium secondary battery according to the present embodiment described above is used.

The description about the first electrode is the same as the description about the electrode for a sodium secondary battery according to the embodiment described above.

[Second Electrode]

The second electrode contains, as an electrode active material of the second electrode, a sodium compound that enables doping and dedoping of metallic sodium, a sodium alloy, or a sodium ion.
The second electrode is composed of a current collector and an electrode mixture agent supported on the current collector. The electrode mixture agent contains the electrode active material of the second electrode, and it may also contain a conductive material or a binding agent.

[Electrode Active Material of Second Electrode]

The electrode active material of the second electrode includes a sodium compound that enables doping and dedoping of metallic sodium, a sodium alloy, or a sodium ion.
Here, in a case where the second electrode is metallic sodium or a sodium alloy, the first electrode acts as a cathode, and the second electrode acts as an anode.
In a case where the second electrode is a sodium compound that enables doping and dedoping of sodium ions, the first electrode acts as an anode, and the second electrode acts as a cathode.
As the sodium compound, it is possible to use any one of an inorganic sodium compound and an organic sodium compound. In the present embodiment, it is preferable to use an inorganic sodium compound from the viewpoint of stability.

(Inorganic Sodium Compound)

From the viewpoint of improving the charging and discharging cycle characteristics of the sodium secondary battery, it is preferable to use an inorganic sodium compound as the electrode active material of the second electrode.
Examples of the inorganic sodium compound include the following compounds.
The inorganic sodium compound includes oxides represented by $NaM^1_{a1}O_2$, such as $NaFeO_2$, $NaMnO_2$, $NaNiO_2$, and $NaCoO_2$.
In addition, the inorganic sodium compound includes oxides represented by $Na_{0.44}Mn_{1-a2}M^1_{a2}O_2$ and oxides represented by $Na_{0.7}Mn_{1-a2}M^1_{a2}O_{2.05}$ ($M^1$ is one or more transition metal elements, $0 < a1 < 1$, $0 \leq a2 < 1$).
In addition, the inorganic sodium compound includes oxides represented by $Na_bM^2_cSi_{12}O_{30}$ ($M^2$ is one or more transition metal elements, $2 \leq b \leq 6$, $2 \leq c \leq 5$), such as $Na_6Fe_2Si_{12}O_{30}$ and $Na_2Fe_5Si_{12}O_{30}$.
In addition, the inorganic sodium compound includes oxides represented by $Na_dM^3_eSi_6O_{18}$ ($M^3$ is one or more transition metal elements, $2 \leq d \leq 6$, $1 \leq e \leq 2$), such as $Na_2Fe_2Si_6O_{18}$ and $Na_2MnFeSi_6O_{18}$.
In addition, the inorganic sodium compound includes oxides represented by $Na_fM^4_gSi_2O_6$ ($M^4$ is a transition metal element and is one or more elements selected from the group consisting of Mg and Al, $1 \leq f \leq 2$, $1 \leq g < 2$), such as $Na_2FeSiO_6$.
In addition, the inorganic sodium compound includes salts of phosphoric acid, such as $NaFePO_4$, $NaMnPO_4$, and $Na_3Fe_2(PO_4)_3$.
In addition, it includes salts of fluorinated phosphoric acids, such as $Na_2FePO_4F$, $Na_2VPO_4F$, $Na_2MnPO_4F$, $Na_2CoPO_4F$, and $Na_2NiPO_4F$.
In addition, the inorganic sodium compound includes salts of fluorinated sulfuric acids, such as $NaFeSO_4F$, $NaMnSO_4F$, $NaCoSO_4F$, and $NaFeSO_4F$.
In addition, the inorganic sodium compound includes salts of boric acid, such as $NaFeBO_4$ and $Na_3Fe_2(BO_4)_3$.
In addition, the inorganic sodium compound includes fluorides represented by $Na_hM^5F_6$ ($M^5$ is one or more transition metal elements, $2 \leq h \leq 3$), such as $Na_3FeF_6$ and $Na_2MnF_6$, and the like.
In the present embodiment, the inorganic sodium compound is preferably an oxide represented by Formula (A).
In a case of using an oxide represented by Formula (A) as the inorganic sodium compound, particularly as the cathode active material, it is possible to improve the charge and discharge capacity of the battery.

$$Na_xMO_2 \qquad (A)$$

(Here, M is one or more elements selected from the group consisting of Fe, Ni, Co, Mn, Cr, V, Ti, B, Al, Mg, and Si, and x is more than 0 and 1.2 or less).
The above-described inorganic sodium compound can be produced by weighing each metal element at a proportion which gives a desired composition and baking the mixed mixture.
Specifically, a mixture is obtained by weighing and mixing metal-containing compounds containing corresponding metal elements at a proportion where a predetermined composition is satisfied.

Then, the obtained mixture is baked, whereby an inorganic sodium compound can be produced.

For example, a case of producing an inorganic sodium compound having a metal element ratio of Na:Mn:Fe:Ni = 1:0.3:0.4:0.3, which is one of the preferred metal element ratios, is an exemplary example.

First, respective raw materials of $Na_2CO_3$, $MnO_2$, $Fe_3O_4$, and $Ni_2O_3$ are weighed at a proportion where a molar ratio of Na:Mn:Fe:Ni of 1:0.3:0.4:0.3 is satisfied.

Next, $Na_2CO_3$, $MnO_2$, $Fe_3O_4$, and $M_2O_3$ are mixed to obtain a mixture, and the obtained mixture is baked, whereby an inorganic sodium compound can be produced.

In order to produce the inorganic sodium compound that is used in the present embodiment, it is possible to use a metal-containing compound containing a metal other than the sodium. Examples of the metal-containing compound containing a metal other than the sodium include an oxide, a compound that is capable of being an oxide in a case of being decomposed at a high temperature, and a compound that is capable of being an oxide in a case of being oxidized at a high temperature.

As such a compound, it is possible to use, for example, a hydroxide, a carbonate, a nitrate, a halide, or an oxalate.

Examples of the sodium compound include one or more compounds selected from the group consisting of sodium hydroxide, sodium chloride, sodium nitrate, sodium peroxide, sodium sulfate, sodium hydrogen carbonate, sodium oxalate, and sodium carbonate. In addition, hydrates of these compounds can also be used. Sodium carbonate is preferable from the viewpoint that it can be safely handled.

In addition, $MnO_2$ is preferable as a manganese compound, $Fe_3O_4$ is preferable as an iron compound, and $Ni_2O_3$ is preferable as a nickel compound. In addition, these metal-containing compounds may be a hydrate.

In a case of producing an inorganic sodium compound, first, a metal complex compound containing a metal other than sodium is obtained, and the obtained metal complex compound is mixed with the above-described sodium compound.

Hereinafter, the metal complex compound containing a metal other than sodium may be referred to as a "precursor".

The precursor can be produced according to a coprecipitation method described below.

In the coprecipitation method, as a raw material for the element M (M is one or more elements selected from the group consisting of Fe, Ni, Co, Mn, Cr, V, Ti, B, Al, Mg, and Si), a compound such as a chloride of the element M, a nitrate of the element M, an acetate of the element M, a formate of the element M, or an oxalate of the element M is used.

This compound is dissolved in water and brought into contact with a precipitating agent to obtain a precipitate containing the precursor.

Among the above raw material, a chloride of the element M is preferable.

In addition, in a case of using a raw material that is difficult to be dissolved in water, an aqueous solution containing the element M may be obtained by dissolving the raw material in the following solvent. The case of using a raw material that is difficult to be dissolved in water is, for example, a case of using, as the raw material, an oxide of the element M, a hydroxide of the element M, or a metal material containing the element M.

As the solvent that is used in this case, it is possible to use an acid such as hydrochloric acid, sulfuric acid, nitric acid, or an aqueous solution thereof.

Further, as the precipitating agent that is used in the coprecipitation method, it is possible to use one or more compounds selected from the group consisting of lithium hydroxide (LiOH), sodium hydroxide (NaOH), potassium hydroxide (KOH), lithium carbonate ($Li_2CO_3$), sodium carbonate ($Na_2CO_3$), potassium carbonate ($K_2CO_3$), ammonium carbonate (($NH_4)_2CO_3$), and (urea ($NH_2)_2CO$).

In addition, one or more hydrates of these compounds may be used, or the compound and a hydrate thereof may be used in combination.

In addition, this precipitating agent may be dissolved in water and used in a form of an aqueous solution.

The concentration of the compound in the precipitating agent in a form of an aqueous solution is generally about 0.5 mol/L or more and 10 mol/L or less and preferably about 1 mol/L or more and 8 mol/L or less.

In addition, as the precipitating agent, it is preferable to use KOH, and it is more preferable to use a KOH aqueous solution. In addition, ammonia water can also be used as the precipitating agent in a form of an aqueous solution, and this can be used in combination with an aqueous solution of the above compound.

Examples of the method of bringing an aqueous solution containing the element M into contact with a precipitating agent include a method of adding a precipitating agent to an aqueous solution containing the element M. Here, the precipitating agent includes the precipitating agent in a form of an aqueous solution.

In addition, it is also possible to use a method of adding an aqueous solution containing the element M to the precipitating agent in a form of an aqueous solution.

In addition, it is also possible to use a method of adding an aqueous solution containing the element M and a precipitating agent to water. Here, the precipitating agent includes the precipitating agent in a form of an aqueous solution.

In a case of adding a precipitating agent, stirring is preferably accompanied.

In addition, among the methods of bringing an aqueous solution containing the element M into contact with a precipitating agent, a method of adding an aqueous solution containing the element M in the precipitating agent in a form of an aqueous solution is preferable from the viewpoint that pH is easily maintained and the particle diameter of the inorganic sodium compound is easily controlled.

In this case, as the aqueous solution containing the element M is added to the precipitating agent in the form of an aqueous solution, the pH of the mixed solution of the aqueous solution containing the element M and the precipitating agent tends to decrease. It is preferable to add the aqueous solution containing M while adjusting the pH of the mixed solution so that the pH satisfies 9 or more and preferably 10 or more. This pH adjustment can also be carried out by adding the precipitating agent in a form of an aqueous solution.

It is noted that the pH value in the present specification is defined as a value measured when the temperature of the mixed solution is 40°C. The pH of the mixed solution is measured when the temperature of the mixed solution sampled from a reaction chamber reaches 40°C.

A precipitate can be obtained by bringing an aqueous solution containing the element M into contact with a precipitating agent. This precipitate contains the precursor.

In addition, a slurry is obtained after bringing the aqueous solution containing the element M into contact with the precipitating agent.

A precipitate can be recovered by subjecting the obtained slurry to solid-liquid separation.

The solid-liquid separation may be carried out using a known method.

In the present embodiment, a method carried out by solid-liquid separation such as filtration is preferably used from the viewpoint of easy operability. In addition, a method of volatilizing a liquid content by heating such as spray drying may also be used.

In addition, the recovered precipitate may be subjected to washing, drying, and the like. The precipitate obtained after the solid-liquid separation may contain excess components of the precipitating agent attached thereto. The excess components of the precipitating agent can be reduced by washing.

As a washing solution that is used in washing, water is preferably used, and a water-soluble organic solvent such as alcohol or acetone may be used.

In addition, it is preferable to carry out drying after washing.

Drying may be carried out by drying by heating or may be carried out by air blow drying, vacuum drying, or the like.

In a case of carrying out drying by heating, examples of the drying by heating include drying by overheating at a temperature of 50°C or higher and 300°C or lower and drying by overheating at a temperature of 100°C or higher and 200°C or lower.

In addition, in a case where washing and drying are counted as one time, they may be carried out two times or more.

The method of mixing the obtained precursor and the sodium compound may be any one of dry mixing or wet mixing.

In the present embodiment, dry mixing is preferable from the viewpoint of easier production.

Examples of the mixing device include a stirring mixer, a V-type mixer, a W-type mixer, a ribbon mixer, a drum mixer, and a ball mill.

After obtaining a mixture of the obtained precursor and the sodium compound, the obtained mixture is baked.

It suffices that the baking is held, for example, at a baking temperature of 400°C or higher and 1,200°C or lower, and it may be held at 500°C or higher and 1,000°C or lower, depending on the kind of sodium compound to be used.

Here, the "baking temperature" means the set temperature of the baking device. In a case where the set temperature is multiply staged, the baking temperature means the highest temperature among the set temperatures.

Further, the time for holding the baking at the above baking temperature is, for example, 0.1 hours or more and 20 hours or less, and it may be 0.5 hours or more and 10 hours or less.

It suffices that the rate of temperature rise to the baking temperature is set to, for example, 50°C/hour or more and 400°C/hour or less.

It suffices that the rate of temperature drop from the holding temperature to room temperature is set to, for example, 10°C/hour or more and 400°C/hour or less.

In addition, as the baking atmosphere, it is possible to use the air atmosphere, an oxygen atmosphere, a nitrogen atmosphere, an argon atmosphere, or a mixed gas atmosphere thereof. The air atmosphere is preferable in the present embodiment.

The baking process may be carried out one time or may be carried out two or more times. In this case, one time is set from the start of temperature rise until the temperature reaches the baking temperature and then decreases to return to room temperature.

In the present embodiment, a reaction accelerating agent may be added to the mixture of the precursor and the sodium compound and then baked.

As the reaction accelerating agent, it is preferable to use an appropriate amount of a halide such as a fluoride or a chloride.

In a case of using a reaction accelerating agent, it is possible to control the crystallinity of the inorganic sodium compound to be generated and the average particle diameter of particles constituting the inorganic sodium compound.

Examples of the halide include $NaF$, $MnF_3$, $FeF_2$, $NiF_2$, $CoF_2$, $NaCl$, $MnCh$, $FeCh$, $FeCl_3$, $NiCl_2$, $CoCl_2$, $NH_4Cl$, and $NH_4I$. In addition, hydrates of these halides may be used.

Other reaction accelerating agents include $Na_2CO_3$, $NaHCO_3$, $B_2O_3$, $H_3BO_3$, and the like.

In a case where the inorganic sodium compound is used as an electrode (cathode) active material for a sodium secondary battery, it is preferable to adjust the particle diameter of the inorganic sodium compound obtained as described above.

The method of adjusting the particle diameter of the inorganic sodium compound includes a method of adjusting it by pulverization.

As the pulverization means that is used in the pulverization, a device that is generally used industrially, such as a ball mill, a jet mill, or a vibration mill, can be used.

After the pulverization, it is preferable to carry out washing, classification, and the like.

In addition, surface treatment or the like in which the surface of the particles of the inorganic sodium compound is coated with an inorganic substance containing Si, Al, Ti, Y or the like may be carried out.

[Binding Agent]

Examples of the binding agent of the second electrode include the binding agents provided as exemplary examples in the electrode for a sodium secondary battery (the first electrode) according to the present embodiment described above.

In addition, the electrode forming agent described above can also be used as a binding agent of the second electrode.

The proportion of the binding agent in the electrode mixture agent is generally 5 parts by mass or more and 20 parts by mass or less with respect to 100 parts by mass of the electrode active material.

[Conductive Material]

Examples of the conductive material of the second electrode include a carbon material, as in the case of the electrode for a sodium secondary battery (the first electrode) according to the present embodiment described above.

More specific examples thereof include a graphite powder, carbon black (for example, acetylene black, Ketjen black, furnace black, and the like), a fiber-shaped carbon material (carbon nanotubes, carbon nanofiber, vapor-grown carbon fiber).

The carbon black has fine particles and thus has a large surface area. Therefore, in a case where a small amount thereof is added to the electrode mixture agent, the conductivity inside the electrode to be obtained can be enhanced, and the charging and discharging efficiency and the large-current discharge characteristics can be also improved.

The proportion of the conductive material in the electrode mixture agent is, for example, 5 parts by mass or more and 20 parts by mass or less with respect to 100 parts by mass of the electrode active material. In a case of using, as the conductive material, such fine particle carbon material and fiber-shaped carbon material as those described above, it is also possible to reduce the amount thereof.

<Production Method for Electrode Mixture Agent Paste>>

A manufacturing method for the electrode mixture agent paste in the second electrode will be described.

The electrode mixture agent paste in the second electrode is obtained by kneading an electrode active material, a conductive material, a binding agent, and an organic solvent.

The kneading method is not particularly limited; however, a mixer having a high shearing force is preferable as used a mixer that is used in kneading. Specific examples thereof include a planetary mixer, a kneader, an extrusion type kneader, and a thin film slewing-type high-speed stirrer.

Regarding the mixing order, a powder of the electrode active material, the conductive material, the binding agent, and the solvent may be mixed collectively. Alternatively, the binding agent, a powder of the electrode active material, and the conductive material may be mixed in order to the solvent. The order is not particularly limited, and for example, the mixture of a powder of the electrode active material and the conductive material may be gradually added. Alternatively, the solvent and the binding agent may be mixed in advance and dissolved.

The proportions of the electrode components in the electrode mixture agent paste, that is, the proportions of the electrode active material, the conductive material, and the binding agent in the electrode mixture agent paste is, for example, 30% by mass or more and 90% by mass or less, 30% by mass or more and 80% by mass or less, or 30% by mass or more and 70% by mass or less, from the viewpoint of the thickness and coatability of the electrode to be obtained.

The second electrode is obtained by applying the electrode mixture agent paste onto a current collector and subsequent drying.

By drying, the solvent in the electrode mixture agent paste is removed, the electrode mixture agent is bound to the current collector, and an electrode is obtained.

[Current Collector]

In the second electrode, as the current collector, it is possible to use a conductor such as Al, Ni, or stainless steel. Al is preferable since it is easy to be processed into a thin film and is inexpensive.

Examples of the shape of the current collector include those such as a foil shape, a flat plate shape, a mesh shape, a net shape, a lath shape, a punched metal shape, and an embossed shape, as well as a combination thereof (for example, a mesh-shaped flat plate). Protrusions and recessions by an etching treatment may be formed on the surface of the current collector.

In manufacturing the second electrode, the method of applying the electrode mixture agent paste onto the current collector is not particularly limited.

Examples thereof include a slit die coating method, a screen coating method, a curtain coating method, a knife coating method, a gravure coating method, and an electrostatic spray method.

In addition, it is preferable to carry out drying after coating. Drying may be carried out by a heat treatment or may be carried out by air blow drying, vacuum drying, or the like.

In a case where drying is carried out by a heat treatment, the temperature is, for example, 50°C or higher and 150°C or lower.

In addition, pressing may be carried out after drying. Examples of the pressing method include methods such as die pressing and roll pressing.

The second electrode can be manufactured according to the method described above. It is noted that the thickness of the electrode is, for example, 5 $\mu$m or more and 500 $\mu$m or less.

[Electrolyte]

Examples of the electrolytes that can be used in the sodium secondary battery according to the present embodiment include $NaClO_4$, $NaPF_6$, $NaAsF_6$, $NaSbF_6$, $NaBF_4$, $NaCF_3SO_3$, $NaN(SO_2CF_3)_2$, a sodium salt of a lower aliphatic carboxylic acid, and $NaAlCl_4$, and a mixture of two or more thereof may be used.

Among these, it is preferable to use one electrolyte containing at least one selected from the group consisting of fluorine-containing $NaPF_6$, $NaAsF_6$, $NaSbF_6$, $NaBF_4$, $NaCF_3SO_3$, and $NaN(SO_2CF_3)_2$.

The above electrolyte is generally dissolved in an organic solvent and used as a non-aqueous electrolytic solution.

As the organic solvent, it is possible to use carbonates such as propylene carbonate, ethylene carbonate, dimethyl carbonate, diethyl carbonate, ethylmethyl carbonate, isopropylmethyl carbonate, vinylene carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethylsulfoxide, 1,3-propanesultone; or an organic solvent having a fluorine substituent, which is obtained by further introducing a fluorine substituent into the above organic solvent. Two or more of these may be mixed and used as the organic solvent.

Examples of the organic solvent having a fluorine substituent include 4-fluoro-1,3-dioxolan-2-one (hereinafter, may be referred to as FEC or fluoroethylene carbonate), and difluoroethylene carbonate (DFEC: trans- or cis-4,5-difluoro-1,3-dioxolan-2-one).

The organic solvent having a fluorine substituent is preferably fluoroethylene carbonate.

These organic solvents having a fluorine substituent may be used alone; however, they may be used in combination with an organic solvent having no fluorine substituent.

The proportion of the organic solvent having a fluorine substituent in the non-aqueous electrolytic solution is in a range of 0.01% by volume or more and 10% by volume or less, preferably 0.1% by volume or more and 8% by volume or less, and more preferably, 0.5% by volume or more and 5% by volume or less.

In addition, in the sodium secondary battery according to the present embodiment, the electrolyte may be used in a state in which the non-aqueous electrolytic solution is retained in a polymer compound, that is, may be used as a gel-shaped electrolyte, or it may be used in a solid state, that is, may be used as a solid electrolyte.

[Separator]

As the separator that can be used in the sodium secondary battery according to the present embodiment, it is possible to use a material having a form such as a porous film, a nonwoven fabric, or a woven fabric, which is made of a material such as a polyolefin resin such as polyethylene or polypropylene, a fluororesin, or a nitrogen-containing aromatic polymer.

In addition, a single layer or a laminated separator using two or more of these materials may be used.

Examples of the separator include the separators described in Japanese Unexamined Patent Application, First Publication No. 2000-30686, and Japanese Unexamined Patent Application, First Publication No. H10-324758.

From the viewpoint that the volume energy density of the battery increases and the internal resistance decreases, the thickness of the separator is preferably as thin as possible as long as the mechanical strength is maintained. The thickness of the separator is, for example, preferably 5 $\mu$m or more and 200 $\mu$m or less, and it is more preferably 5 $\mu$m or more and 40 $\mu$m or less.

The separator preferably has a porous film containing a thermoplastic resin.

In the sodium secondary battery, in a case where an abnormal current flows in the battery due to a short circuit between the cathode and the anode, it is important to interrupt such a current to block (shut down) the flow of the excessive current.

As a result, the separator is required to execute shutdown (to block fine pores of the porous film in a case where the separator has a porous film containing a thermoplastic resin) at a temperature as low as possible in a case where the temperature exceeds a normal operating temperature.

Furthermore, it is required to maintain the shutdown state without film breakage due to a high temperature even in a case where the temperature inside the battery rises to a certain degree of a high temperature after the shutdown; in other words, it is required to have high heat resistance.

In a case of using, as the separator, a separator made of a laminated porous film in which a heat-resistant porous layer containing a heat-resistant resin and a porous film containing a thermoplastic resin are laminated, it is possible to further prevent film breakage due to heat. Here, the heat resistant porous layer may be laminated on both sides of the porous film.

Due to having high discharge capacity, the sodium secondary battery can be suitably used in the use application not only as a small-sized power source of a cellular phone, a portable audio device, a laptop computer, or the like, but also as a mobile medium-sized battery such as a power source for transportation equipment such as an automobile, a motorcycle, an electric chair, a forklift, a train, an airplane, a ship, a spaceship, and a submarine, a power source for a robot such as a farm tractor, a mobile power source for a use application to camping, a power source for an outdoor vending machine, and a power source for an indoor vending machine.

In addition, it can be suitably used in the use application as a stationary power source for a factory, a house, or another outdoor device, a load leveling power supply source for a charging device for a solar cell, a charging device for wind power generation, or other various power generation device, a power source in a low or high temperature environment such as a cold storage or freezing storage warehouse, an extremely cold region, a desert, or outer space, a stationary battery such as a power supply for an automatic opening-closing door, and a large-sized battery since raw materials that are abundantly supplied and are inexpensive can be used as the electrode material of the sodium secondary battery according to the present embodiment.

<Cathode Active Material for All-Solid State Sodium Secondary Battery>

The electrode active material for a sodium secondary battery according to the present embodiment described above is preferably an anode active material for an all-solid state sodium secondary battery.

<All-Solid State Sodium Secondary Battery>

Next, while describing the configuration of the all-solid state sodium secondary battery, an anode in which the electrode active material for a secondary battery according to one embodiment of the present invention is used as an anode active material of an all-solid state sodium secondary battery, and an all-solid state sodium secondary battery having this anode will be described.

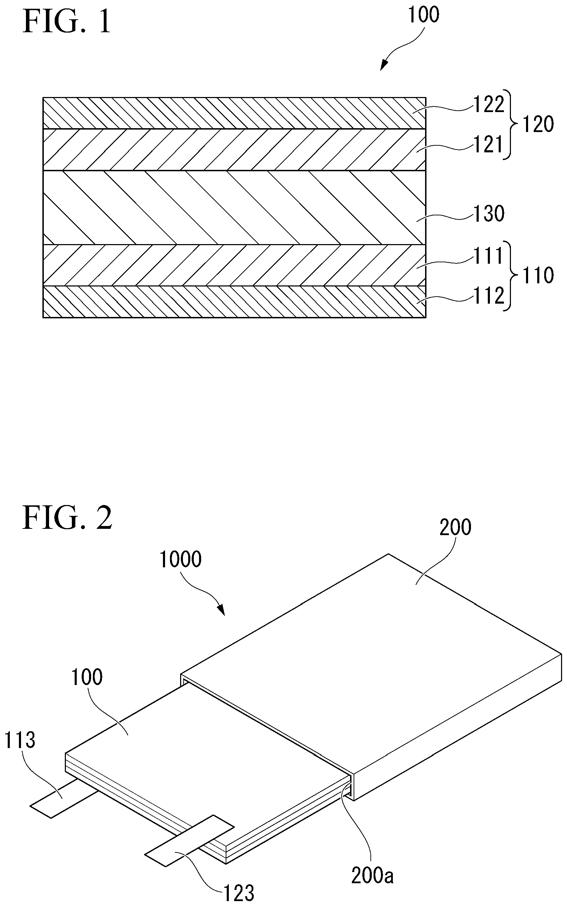

FIGS. 1 and 2 are each a schematic view showing one example of the all-solid state sodium secondary battery according to the present embodiment. FIG. 1 is a schematic view showing a laminate included in an all-solid state sodium secondary battery according to the present embodiment. FIG. 2 is a schematic view showing an overall configuration of the all-solid state sodium secondary battery according to the present embodiment.

An all-solid state sodium secondary battery 1000 has a laminate 100 that has a cathode 110, an anode 120, and a solid electrolyte layer 130, and has an exterior body 200 that accommodates the laminate 100.

The material constituting each member will be described later.

The laminate 100 may have an external terminal 113 that is connected to a cathode current collector 112 and an external terminal 123 that is connected to an anode current collector 122. In addition, the all-solid state sodium secondary battery 1000 may have such a separator that is used in the secondary battery in the related art, between the cathode 110 and the anode 120.

The all-solid state sodium secondary battery 1000 has an insulator (not shown in the drawing) that insulates the laminate 100 and the exterior body 200 and a sealing body (not shown in the drawing) that seals an opening portion 200a of the exterior body 200.

As the exterior body 200, it is possible to use a container formed by molding a highly anti-corrosive metal material such as aluminum, stainless steel, or nickel-plated steel. In addition, it is also possible to use a container obtained by processing a laminate film, at least one surface of which has been subjected to anti-corrosion processing, into a bag shape.

Examples of the shape of the all-solid state sodium battery 1000 include shapes such as a coin shape, a button shape, a paper shape (or a sheet shape), a cylindrical shape, and a rectangular shape.

The all-solid state sodium secondary battery 1000 is illustrated as having one laminate 100; however, it is not limited thereto. The all-solid state sodium secondary battery 1000 may have a configuration in which the laminate 100 is used as a unit cell and a plurality of unit cells (the laminates 100) are sealed inside the exterior body 200.

Hereinafter, each configuration will be described in order.

(Cathode)

The cathode 110 according to the present embodiment has a cathode active material layer 111 and a cathode current collector 112.

The cathode active material layer 111 contains a cathode active material. In addition, the cathode active material layer 111 may contain a solid electrolyte (a second solid electrolyte), a conductive material, and a binder.

As the cathode active material contained in the cathode active material layer 111, it is possible to use those provided as exemplary examples as the material as the electrode active materials contained in the second electrode.

(Solid Electrolyte)

As the solid electrolyte which may be contained in the cathode active material layer 111 according to the present embodiment, it is possible to employ a solid electrolyte that has a sodium ion conductivity and is used in a known all-solid state battery. As such a solid electrolyte, it is possible to use, for example, a polymer electrolyte such as a polyethylene oxide-based polymer compound or a polymer compound containing at least one of a polyorganosiloxane chain or a polyoxyalkylene chain.

In addition, it is also possible to use a so-called gel type electrolyte in which a non-aqueous electrolytic solution is retained in a polymer.

In addition, in a case of using a sulfide-based solid electrolyte, an inorganic compound-based solid electrolyte containing a sulfide, an inorganic compound-based solid electrolyte containing aluminum, or a NASICON type solid electrolyte is used, it is possible to further improve the safety.

In addition, in the sodium secondary battery according to the present embodiment, the solid electrolyte may serve as a separator in a case where a solid electrolyte is used. In this case, the separator is not an essential component.

(Sulfide-Based Solid Electrolyte)

Examples of the sulfide-based solid electrolytes include $Na_2S-SiS_2$, $Na_2S-GeS_2$, $Na_2S-P_2S_5$, and $Na_2S-B_2S_3$.

It is noted that in the present specification, the expression "-based compound" that refers to a sulfide-based solid electrolyte is used as a general term for solid electrolytes containing mainly raw materials such as "$Na_2S$" and "$P_2S_5$" described before "-based compound". For example, the $Na_2S-P_2S_5$-based compound includes solid electrolytes containing $Na_2S$ and $P_2S_5$ and further containing another raw material. In addition, the $Na_2S-P_2S_5$-based compound also includes solid electrolytes that differ in the mixing ratio between $Na_2S$ and $P_2S_5$.

The sulfide-based solid electrolyte may be a crystalline material or may be a noncrystalline (amorphous) material. The sulfide-based solid electrolyte preferably contains a noncrystalline material.

(Inorganic Compound-Based Solid Electrolyte Containing Sulfide)

Examples of the inorganic compound-based solid electrolyte containing a sulfide include $Na_2S-SiS_2-Na_3PO_4$ and $Na_2S-SiS_2-Na_2SO_4$.

(Inorganic Compound-Based Solid Electrolyte Containing Aluminum)

Examples of the inorganic compound-based solid electrolyte containing aluminum include $Na_2O-11Al_2O_3$ and $Na_2O-5.33Al_2O_3$.

(NASICON Type Solid Electrolyte)

The NASICON type solid electrolyte includes $Na_3Zr_2Si_2PO_{12}$, $NaZr_2(PO_4)_3$, $NaZr_2SiP_2O_{12}$, and $NaZr_2Si_2PO_{12}$.

In the present embodiment, it is more preferable to use the NASICON type solid electrolyte.

Two or more kinds of solid electrolytes can be used in combination as long as the effect of the invention is not impaired.

(Conductive Material)

As the conductive material which may be contained in the cathode active material layer 111 according to the present embodiment, it is possible to use a carbon material or a metal compound. Examples of the carbon material include a graphite powder, carbon black (for example, acetylene black), and a fiber-shaped carbon material. The carbon black is a fine particle and has a large surface area, and thus in a case where an appropriate amount thereof is added to the cathode active material layer 111, it is possible to increase the conductivity inside the cathode 110 and improve charging and discharging efficiency and output characteristics. On the other hand, in a case where the adding amount of carbon black is too large, both the binding force between the cathode active material layer 111 and the cathode current collector 112 and the binding force inside the cathode active material layer 111 are reduced, which, on the contrary, causes the internal resistance to increase. Examples of the metal compound include a metal, a metal alloy, and a metal oxide, which have electrical conductivity.

In a case of a carbon material, the proportion of the conductive material in the cathode active material layer 111 is preferably 5 parts by mass or more and 20 parts by mass or less with respect to 100 parts by mass of the cathode active material. It is also possible to reduce this proportion in a case of using a fiber-shaped carbon material such as graphitized carbon fiber or carbon nanotubes as the conductive material.

(Binder)

In a case where the cathode active material layer 111 has a binder, it is possible to use a thermoplastic resin as the binder. Examples of thermoplastic resin include a polyimide-based resin; a fluororesin such as a polyvinylidene fluoride (hereinafter, may be referred to as PVdF), polytetrafluoroethylene (hereinafter, may be referred to as PTFE), an ethylene tetrafluoride propylene hexafluoride-vinylidene fluoride-based copolymer, a propylene hexafluoride vinylidene fluoride-based copolymer, or an ethylene tetrafluoride perfluorovinyl ether-based copolymer; and a polyolefin resin such as polyethylene or polypropylene.

Two or more kinds of these thermoplastic resins may be mixed and used. In a case where a fluororesin and a polyolefin resin are sued as the binder, and with respect to the entire cathode active material layer 111, the proportion of the fluororesin is set to 1% by mass or more and 10% by mass or less and the proportion of the polyolefin resin is set to 0.1% by mass or more and 2% by mass or less, the cathode active material layer 111 becomes such that both the adhesion between the cathode active material layer 111 and the cathode current collector 112 and the binding force inside the cathode active material layer 111 are high.

The cathode active material layer 111 may be processed in advance as a sheet-shaped molded body containing a cathode active material and used as the "electrode" in the present invention. It is noted that in the following description, such a sheet-shaped molded body may be referred to as a "cathode active material sheet". A laminate obtained by laminating a current collector on the cathode active material sheet may be used as an electrode.

The cathode active material sheet may contain any one or more selected from the group consisting of the above-described solid electrolyte, conductive material, and binder.

The cathode active material sheet is obtained by, for example, mixing a cathode active material, a sintering aid, the above-described conductive material, the above-described binder, a plasticizer, and a solvent to prepare a slurry, applying the obtained slurry onto a carrier film, and drying the carrier film.

As the sintering aid, it is possible to use, for example, $Li_3BO_3$ or $Al_2O_3$.

As the plasticizer, it is possible to use, for example, dioctyl phthalate.

As the solvent, it is possible to use, for example, acetone, ethanol, or N-methyl-2-pyrrolidone.

A ball mill can be used for mixing at the time of the preparation of the slurry. In a large number of cases, the obtained mixture contains air bubbles mixed at the time of mixing, and thus it is good to defoam the mixture under reduced pressure. In a case where defoaming is carried out, a part of the solvent volatilizes, whereby a slurry is concentrated to have a high viscosity.

Application of the slurry can be carried out using a known doctor blade.

A PET film can be used as the carrier film.

The cathode active material sheet obtained after drying is peeled off from the carrier film and appropriately subjected to punching process, thereby being processed into a required shape and used. In addition, the cathode active material sheet may be monoaxially pressed in the thickness direction as appropriate.

(Cathode Current Collector)

As the cathode current collector 112 contained in the cathode 110 according to the present embodiment, it is possible to use a sheet-shaped member made of a metal material such as Al, Ni, stainless steel, or Au as a forming material. Among the above, it is preferable to use Al as a forming material and process it into a thin film shape since it is easy to be processed and inexpensive.

Examples of the method of supporting the cathode active material layer 111 on the cathode current collector 112 include a method of subjecting the cathode active material layer 111 to pressure molding on the cathode current collector 112. Cold pressing or hot pressing can be used for pressure molding.

Alternatively, a mixture of a cathode active material, a solid electrolyte, a conductive material, and a binder is pasted using an organic solvent to obtain a cathode mixture agent, and at least one surface side of the cathode current collector 112 is coated with the obtained cathode mixture agent, and the coated surface is dried and pressed to be firmly fixed, whereby the cathode active material layer 111 may be supported on the cathode current collector 112.

Alternatively, a mixture of a cathode active material, a solid electrolyte, and a conductive material is pasted using an organic solvent to obtain a cathode mixture agent, and the obtained cathode mixture agent is applied on at least one surface side of the cathode current collector 112, carrying out drying, and carrying out sintering, whereby the cathode active material layer 111 may be supported on the cathode current collector 112.

Examples of the organic solvent that can be used in the cathode mixture agent include amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone (hereinafter, may be referred to as NMP).

Examples of the method of coating the cathode current collector 112 with the cathode mixture agent include a slit die coating method, a screen coating method, a curtain coating method, a knife coating method, a gravure coating method, and an electrostatic spray method.

The cathode 110 can be manufactured according to the method described above.

(Anode)

The anode 120 has an anode active material layer 121 and the anode current collector 122. The anode active material layer 121 contains an anode active material. In addition, the anode active material layer 121 may contain a solid electrolyte and a conductive material. As the solid electrolyte, the conductive material, and the binder, it is possible to use those described above.

(Anode Active Material)

As the anode active material contained in the anode active material layer 121, it is possible to use the electrode active material according to the present embodiment described above.

(Anode Current Collector)

The anode current collector 122 included in the anode 120 includes a belt-shaped member made of a metal material such as Al, Cu, Ni, or stainless steel as a foaming material. Among the above, it is preferable to use Al as a forming material and process it into a thin film shape since it is hard to form an alloy with Na, is easy to be processed, and is inexpensive.

Examples of the method of supporting the anode active material layer 121 on the anode current collector 122 include a method of carrying out supporting by pressure molding as in the case of the cathode 110, a method of coating the anode current collector 122 with a paste-shaped anode mixture agent containing an anode active material, pressing and pressurizing the anode mixture agent after drying, and a method of applying a paste-shaped anode mixture agent containing an anode active material onto the anode current collector 122, carrying out drying, and then carrying out sintering.

(Solid Electrolyte Layer)

The solid electrolyte layer 130 has the above solid electrolyte (a first solid electrolyte). In a case where cathode active material layer 111 contains a solid electrolyte, the solid electrolyte (the first solid electrolyte) constituting the solid electrolyte layer 130 and the solid electrolyte (the second solid electrolyte) contained in cathode active material layer 111 may be the same substance. The solid electrolyte layer 130 functions as a medium that transfers sodium ions and also functions as a separator that separates the cathode 110 and the anode 120.

It is possible to form the solid electrolyte layer 130 by depositing, according to a sputtering method, an inorganic solid electrolyte on the surface of the cathode active material layer 111 included in the above-described cathode 110.

In addition, it is possible to form the solid electrolyte layer 130 by applying a paste-shaped mixture agent containing a solid electrolyte onto the surface of the cathode active material layer 111 included in the cathode 110 and carrying out drying. After drying, the solid electrolyte layer 130 may be formed by carrying out press molding and further carrying out pressurizing according to a cold isostatic pressing (CIP).

Further, it is possible to form the solid electrolyte layer 130 by forming a solid electrolyte into a pellet shape in advance, laying the solid electrolyte pellet over the above-described cathode active material sheet, and subjecting them to monoaxial pressing in the lamination direction. The cathode active material sheet becomes the cathode active material layer 111.

Further, the cathode current collector 112 is arranged on the cathode active material layer 111 with respect to a laminate of the obtained cathode active material layer 111 and the solid electrolyte layer 130. Monoaxial pressing is carried out in the lamination direction and further, sintering is carried out, whereby the solid electrolyte layer 130 and cathode 110 can be formed.

Using a known method, the laminate 100 can be manufactured by laminating the anode 120 on the solid electrolyte layer 130 provided on the cathode 110 as described above in a state where the anode electrolyte layer 121 is in contact with the surface of the solid electrolyte layer 130.

[Evaluation of All-Solid State Sodium Secondary Battery]

The discharge capacity of the all-solid state sodium secondary battery according to the present embodiment can be measured according to the following method.

Using a monoaxial press machine, the all-solid state sodium secondary battery is pressurized to 510 MPa parallelly to the lamination direction, charged and discharged while being heating to 100°C using a mantle heater, and then evaluated.

As for the charging conditions, charging at a constant current is carried out at 5 $\mu$A from the rest potential to 4.5 V

As for the discharge conditions, discharging at a constant current is carried out at 5 $\mu$mA, and the cutoff is carried out at a voltage of 1.5 V.

Two cycles of charging and discharging are carried out.

Here, charging means a process of doping (reducing) sodium ions into the active material of the first electrode, and discharging means a process of dedoping (oxidizing) sodium ions from the active material of the first electrode.

In a case where the discharge capacity in the second cycle is 50% or more of the discharge capacity in the first cycle, it is evaluated as "the decrease in discharge capacity hardly occurs".

In addition, in a case where the initial voltage is 2.5 V or more, it is evaluated as "the initial voltage is high".

As one aspect, the present invention also includes the following aspect.

(2-1)
Use of an electrode active material for a sodium secondary battery the use being for a sodium secondary battery containing Na and $M^1$,

in which $M^1$ is one or more elements selected from the group consisting of Si, Ge, Sn, Pb, Sb, and Bi, and
a molar ratio (Na:$M^1$) of Na to $M^1$ is t: 1, where t is a number of 2 or more and 3 or less.

(2-2)
The use of the electrode active material for a sodium secondary battery according to (2-1), in which $M^1$ includes at least Sn.

(2-3)
The use of the electrode active material for a sodium secondary battery according to (2-2), in which t is a number of 2 or more and 2.5 or less.

(2-4)
The use of the electrode active material for a sodium secondary battery according to (2-2) or (2-3), in which the electrode active material for a sodium secondary battery has a peak in a range of $2\theta = 38°$ or more and 39° or less in a powder X-ray diffraction measurement using a CuKa ray.

(3-1)

Use of an electrode active material for a sodium secondary battery, for an all-solid state sodium secondary battery, the use being for a sodium secondary battery containing Na and $M^1$,

in which $M^1$ is one or more elements selected from the group consisting of Si, Ge, Sn, Pb, Sb, and Bi, and a molar ratio (Na:$M^1$) of Na to $M^1$ is t: 1, where t is a number of 2 or more and 3 or less.

(3-2)

The use of the electrode active material for a sodium secondary battery according to (3-1), in which $M^1$ includes at least Sn.

(3-3)

The use of the electrode active material for a sodium secondary battery according to (3-2), in which t is a number of 2 or more and 2.5 or less.

(3-4)

The use of the electrode active material for a sodium secondary battery according to (3-2) or (3-3), in which the electrode active material for a sodium secondary battery has a peak in a range of $2\theta = 38°$ or more and $39°$ or less in a powder X-ray diffraction measurement using a CuKa ray.

A "cathode active material T" described later refers to an electrode active material for a sodium secondary battery, containing Na and $M^1$, in which $M^1$ is one or more elements selected from the group consisting of Si, Ge, Sn, Pb, Sb, and Bi, and a molar ratio (Na:$M^1$) of Na to $M^1$ is t: 1, where t is a number of 2 or more and 3 or less.

(4-1)

A cathode active material T that is in contact with a solid electrolyte layer.

(4-1-1)

The cathode active material T according to (4-1), in which the solid electrolyte includes an oxide-based solid electrolyte.

(5-1)

A cathode that is in contact with a solid electrolyte layer, the cathode including:

a cathode active material layer that is in contact with the solid electrolyte layer; and
a current collector on which the cathode active material layer is laminated,
in which the cathode active material layer contains the cathode active material T.

(5-2)

A cathode that is in contact with a solid electrolyte layer, the cathode including:

a cathode active material layer that is in contact with the solid electrolyte layer; and
a current collector on which the cathode active material layer is laminated,
in which the cathode active material layer contains the cathode active material T and a solid electrolyte, and
the cathode active material T includes a plurality of particles, where a gap between the plurality of particles is filled with the solid electrolyte which comes into contact with the particles.

(5-3)

The cathode according to (5-2), in which the solid electrolyte and the particles contained in the cathode active material layer are each in contact with the solid electrolyte layer.

(5-A)

The cathode according to (5-1), (5-2), or (5-3), in which the solid electrolyte layer contains an oxide-based solid electrolyte.

(5-B)

The cathode according to (5-1), (5-2), (5-3), or (5-A), in which the solid electrolyte contained in the cathode active material layer is an oxide-based solid electrolyte.

(5-5)

An all-solid state sodium ion battery including:

the cathode active material T according to any one of (4-1) and (4-1-1); or
the cathode according to any one of (5-2), (5-3), (5-4), (5-A), and (5-B).

(6-1) A charging method for an all-solid state sodium ion battery, including:

providing a solid electrolyte layer by bringing a cathode into contact with an anode so that the cathode and the anode are not short-circuited; and
applying a negative potential to the cathode and a positive potential to the anode from an external power supply,

in which the cathode includes the cathode active material T.

(6-2)
A discharging method for an all-solid state sodium ion battery, including:

providing a solid electrolyte layer by bringing a cathode into contact with an anode so that the cathode and the anode are not short-circuited; and
applying a negative potential to the cathode and a positive potential to the anode from an external power supply to charge an all-solid state sodium ion battery; and
connecting a discharge circuit to the cathode and the anode of the charged all-solid state sodium ion battery, in which the cathode includes the cathode active material T.

(6-A)
The charging method for an all-solid state lithium ion battery according to (6-1) or the discharging method for an all-solid state sodium ion battery according to (6-2),
in which the solid electrolyte layer contains an oxide-based solid electrolyte.
As described above, the preferred embodiment examples according to the present invention have been described with reference to the attached drawings; however, the present invention is not limited to such examples. The various shapes, combinations, and the like of the constitutional members shown in the above examples are merely examples, and thus various modifications can be made based on design requirements and the like as long as they do not depart from the gist of the present invention.

[Examples]

Hereinafter, the present invention will be described in more detail with reference to Examples; however, the present invention is not limited to the following examples unless the gist thereof is changed.

<Evaluation method>

A produced electrode active material was measured by the following method.
In addition, using the produced electrode active material, a sodium secondary battery was manufactured and evaluated by the following method.

<<Composition Analysis>>

Particles of the obtained electrode active material were dissolved in hydrochloric acid, and then the composition analysis of the electrode active material produced by a method described later was carried out by using an inductively coupled plasma emission analysis apparatus (SII NanoTechnology Inc., SPS3000).

<<Powder X-ray Diffraction Measurement>>

The measurement of the crystal structure of the electrode active material was carried out by using a powder X-ray diffraction measurement device RINT2500TTR manufactured by Rigaku Corporation under the following conditions unless otherwise specified.

X-ray: $CuK\alpha$
Voltage - current: 40 kV - 140 mA
Measurement angle range: $2\theta = 10°$ to $90°$
Step: $0.02°$
Scan speed: $4°$/min

«Evaluation of Diffusion Coefficient of Sodium Atom according to Molecular Dynamics Method»

For the computer simulation, a VASP5.4 program package manufactured by VASP Software GmbH, which is one of the first-principles molecular dynamics (MD) methods, was used.
As input conditions, a crystal structure determined from the results of the X-ray diffraction measurement was used for the initial coordinates of each atom.
In carrying out the simulation, the following computing conditions were adopted in order to reproduce the tendencies of the actual measurements.

Computational model: $2 \times 2 \times 2$ cells, with each axis of the unit lattice being expanded twice.

Temperature: 298 K and 673 K
Reproduction time: 50 picoseconds (50,000 steps)
Energy cutoff: 350 eV
Computation of interaction between particles: Density functional theory computation.

[Calculation of Diffusion Coefficient of Sodium Atom by Computer Simulation]

From the moving distance of the sodium atom obtained from computer simulation, the diffusion coefficient of the sodium atom was calculated according to Expression (D).

$$(\text{Diffusion coefficient}) = \{\{\Sigma((\text{coordinates after elapse of t steps}) - (\text{coordinates of randomly selected starting point}))^2\}/\text{number of particles}\}/\text{elapsed time (number of steps)}/6 \quad \cdots(\text{D})$$

<Example 1>

(Production 1 of Electrode Active Material for Sodium Secondary Battery)

First, in an argon atmosphere, each of Na and an Sn powder was weighed at a proportion where a composition of Na:Sn = 2.25:1 (in terms of molar ratio) is satisfied.
As Na, a Na block manufactured by Sigma-Aldrich Co., LLC (a 10 mm square block, purity: 99.7%) was used.
As the Sn powder, an Sn powder manufactured by Sigma-Aldrich Co., LLC (particle diameter: 150 nm, purity: 99.7%) was used.
Next, the Na block was placed in a zirconia pot for a planetary ball mill (manufactured by Fritsch Japan Co., Ltd.).
Ten zirconia balls ($\varphi$ 10 mm: manufactured by Fritsch Japan Co., Ltd.) were added thereto as media.
Further, the Sn powder was added thereto and sufficient mixing was carried out with a planetary ball mill device at room temperature (20°C) at 500 rpm for 5 minutes.
As a result, an electrode active material 1 for a sodium secondary battery, having a form of an alloy powder of Na and Sn, was obtained. The composition of the electrode active material for a sodium secondary battery 1 was $Na_9Sn_4$.

<Example 2>

(Production 2 of Electrode Active Material for Sodium Secondary Battery)

An electrode active material 2 for a sodium secondary battery was obtained in the same manner as in Example 1, except that the ratio of Na to the Sn powder was changed to Na:Sn = 2.5:1 (in terms of molar ratio).
The composition of the electrode active material for a sodium secondary battery 2 was $Na_{10}Sn_4$.

<Example 3>

(Production 3 of Electrode Active Material for Sodium Secondary Battery)

An electrode active material 3 for a sodium secondary battery was obtained in the same manner as in Example 1, except that the ratio of Na to the Sn powder was changed to Na:Sn = 2:1 (in terms of molar ratio).
The composition of the electrode active material for a sodium secondary battery 3 was $Na_8Sn_4$.

<Comparative Example 1>

(Production 4 of Electrode Active Material for Sodium Secondary Battery)

An electrode active material 4 for a sodium secondary battery was obtained in the same manner as in Example 1, except that the ratio of Na to the Sn powder was changed to Na:Sn = 3.75:1 (in terms of molar ratio).

<Comparative Example 2>

(Electrode Active Material for Secondary Battery 5)

A commercially available Sn foil (manufactured by Nilaco Corporation) was used as an electrode active material 5 for a secondary battery.

<Result of Powder X-ray Diffraction Measurement>

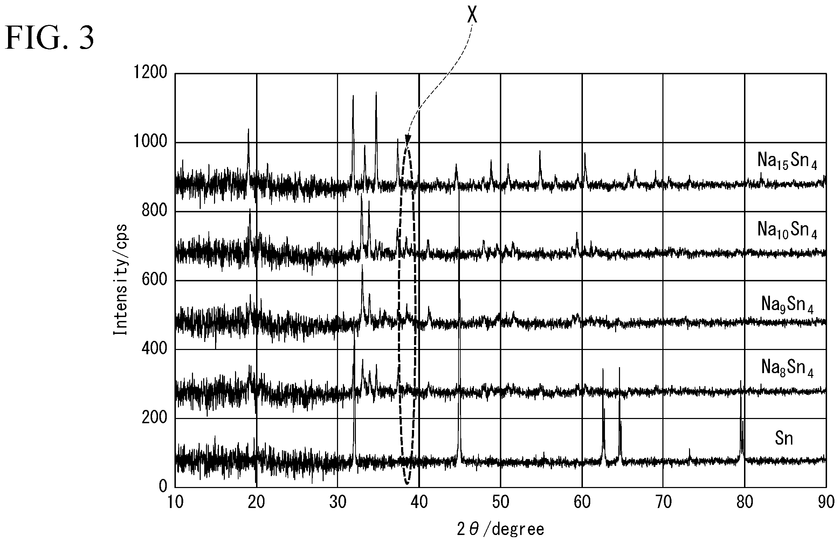

The results of the powder X-ray diffraction measurements of the electrode active materials for a sodium secondary battery of Examples 1 to 3 and Comparative Example 1 and the result of the powder X-ray diffraction measurement of the electrode active material of Comparative Example 2 are shown in FIG. 3.

In FIG. 3, "$Na_9Sn_4$" indicates the result of the powder X-ray diffraction measurement of the electrode active material for a sodium secondary battery of Example 1.

In FIG. 3, "$Na_{10}Sn_4$" indicates the result of the powder X-ray diffraction measurement of the electrode active material for a sodium secondary battery of Example 2.

In FIG. 3, "$Na_8Sn_4$" indicates the result of the powder X-ray diffraction measurement of the electrode active material for a sodium secondary battery of Example 3.

In FIG. 3, "$Na_{15}Sn_4$" indicates the result of the powder X-ray diffraction measurement of the electrode active material for a sodium secondary battery of Comparative Example 1.

In FIG. 3, "Sn" indicates the powder X-ray diffraction measurement of the electrode active material of Comparative Example 2.

As shown in FIG. 3, in the electrode active materials for a sodium secondary battery of Examples 1 to 3, a peak was confirmed in a range of $2\theta = 38°$ or more and $39°$ or less (a range indicated by the broken line with a symbol X).

On the other hand, in the electrode active materials of Comparative Examples 1 and 2, no peak could be observed in a range of $2\theta = 38°$ or more and $39°$ or less.

<Manufacturing of All-Solid State Sodium Secondary Battery>

[Manufacturing of First Electrode (Anode)]

The powder of the electrode active material for a sodium secondary battery of each of Examples 1 to 3 and Comparative Examples 1 and 2, produced by the method described above, was used as the first electrode (the anode).

[Manufacturing of Second Electrode (Cathode)]

A layer-shaped oxide ($NaFe_{0.4}Mn_{0.3}Ni_{0.3}O_2$) as the cathode active material, acetylene black (manufactured by Denka Company Limited) as the conductive material, a conductive auxiliary agent (vapor grown carbon fiber (VCGF)), and a solid electrolyte ($Na_3Zr_2Si_2PO_{12}$) were weighed at a proportion where a composition of the cathode active material: the acetylene black:the conductive auxiliary agent:the solid electrolyte = 30:5:10:55 (in terms of mass ratio). Then, they were mixed to obtain a mixed powder.

A resin binder (ethyl cellulose), a plasticizer (dioctyl phthalate), and a solvent (acetone) were added to the obtained mixed powder at a proportion where a composition of the mixed powder:the resin binder:the plasticizer:the solvent = 100:10:10:100 (in terms of mass ratio), and mixing was carried out using a planetary stirring-defoaming device.

The obtained slurry was defoamed using a planetary stirring·defoaming device to obtain a cathode mixture agent slurry.

Using a doctor blade, the obtained cathode mixture agent slurry was applied onto an Al foil, and the coating film was dried to form a cathode sheet having a thickness of 50 $\mu$m.

The cathode sheet was subjected to a punching process into a circle form having a diameter of 10 mm, and moreover subjected to monoaxial pressing in the thickness direction of the cathode film at 20 MPa for 1 minute to obtain a cathode active material sheet having a thickness of 40 $\mu$m.

<Production of All-Solid State Sodium Secondary Battery>

The following operations were carried out in a glove box in an argon atmosphere.

A compacted powder body-type all-solid state battery was produced for battery evaluation for the above electrode active material.

First, 20 mg of the electrode active material for a sodium secondary battery as the first electrode was added into a cylinder formed by combining a lower piston and a tube of an impedance measuring jig (manufactured by Hohsen Corp.), and the surface thereof was flattened.

Next, 100 mg of a solid electrolyte powder of $Na_3Zr_2Si_2PO_{12}$ (manufactured by Toshima Manufacturing Co., Ltd.) was added thereto and laminated.

Further, the cathode active material sheet as a second electrode was placed at a position where the mixture agent layer was on the lower side.

Then, the upper piston was combined to produce an all-solid state sodium secondary battery.

[Evaluation of All-Solid State Sodium Secondary Battery]

Using a monoaxial press machine, the obtained all-solid state sodium secondary battery was pressurized to 510 MPa parallelly to the lamination direction, charged and discharged while being heating to 100°C using a mantle heater, and then evaluated.

As for the charging conditions, charging at a constant current was carried out at 5 $\mu$A from the rest potential to 5 V.

As for the discharge conditions, discharging at a constant current was carried out at 5 $\mu$mA, and the cutoff was carried out at a voltage of 1 V.

Two cycles of the above charging and discharging were carried out.

Here, charging means a process of doping (reducing) sodium ions into the active material of the first electrode, and discharging means a process of dedoping (oxidizing) sodium ions from the active material of the first electrode. Table 1 shows the discharge capacities of the sodium secondary battery produced using the electrode for a sodium secondary battery of Example 1 in the first cycle and the second cycle.

[Table 1]

| | Electrode active material | $M^1$ | t | Initial voltage | Discharge capacity in first cycle (mAh/g) | Discharge capacity in second cycle (mAh/g) |
|---|---|---|---|---|---|---|
| Example 1 | $Na_9Sn_4$ | Sn | 2.25 | 2.6 V | 72 mAh/g | 40 mAh/g |
| Example 2 | $Na_{10}Sn_4$ | Sn | 2.5 | 2.7 V | Experiment omitted | |
| Example 3 | $Na_8Sn_4$ | Sn | 2 | 2.6 V | | |
| Comparative Example 1 | $Na_{15}Sn_4$ | Sn | 3.75 | 2.7 V | Charging cannot be carried out from first time due to occurrence of short circuit | |
| Comparative Example 2 | Sn | Sn | - | 0 V | Data are not present | |

As shown in the results from Example 1, in a case where $Na_9Sn_4$ was used as the electrode active material, the initial voltage was high, and the second charging and discharging were possible. Furthermore, the discharge capacity in the second cycle maintained 50% or more of the discharge capacity in the first cycle. The reason why charging and discharging in the second cycle are possible and the discharge capacity is maintained even in the second cycle is presumed to be because the anode active material is hardly detached from the electrode current collector and the electrode is hardly broken. In other words, it can be speculated that in the electrode active material of Example 1, the width of volume change of the electrode active material in association with charging and discharging is small.

In Examples 2 and 3, it could be inferred that the same results as in Example 1 would be obtained, and thus the charging and discharging test was omitted.

In Comparative Example 1 to which the present embodiment was not applied, charging and discharging could not be carried out from the first time due to the occurrence of the short circuit.

<Results of Evaluation of Diffusion Coefficient of Na Atom>

Table 2 shows the results of the evaluation of the diffusion coefficients of the Na atom in the electrode active materials for a sodium secondary battery of Examples 1 and 2 and Comparative Example 1.

[Table 2]

| | Composition | Diffusion coefficient at 298 K ($cm^2$/s) | Diffusion coefficient at 673 K ($cm^2$/s) |
|---|---|---|---|
| Example 1 | $Na_9Sn_4$ | $1.46 \times 10^{-5}$ | $1.69 \times 10^{-5}$ |
| Example 2 | $Na_{10}Sn_4$ | $1.16 \times 10^{-6}$ | $5.38 \times 10^{-6}$ |
| Comparative Example 1 | $Na_{15}Sn_4$ | Below detection limit | $2.36 \times 10^{-6}$ |

As shown in Table 2, as a result of computational simulation, it was confirmed that in Examples 1 and 2, the diffusion coefficient values are high at both 298 K and 673 K, and sodium ions can move smoothly.

On the other hand, in Comparative Example 1, the diffusion coefficient is below the detection limit at 298 K, that is, the movement of sodium ions can not be confirmed, and the diffusion coefficient is a low value even at 673 K.

The fact that sodium ions can move more smoothly in Examples 1 and 2 than in Comparative Example 1 is supported by the evaluation based on the diffusion coefficient obtained from the computational simulation.

[Industrial Applicability]

Since the electrode for a sodium secondary battery according to the present invention enables the formation of an active material layer having a sufficient thickness, the rate of the active material amount to the volume of the current collector can be increased, and it is possible to produce a battery having a large discharge capacity per volume.

Furthermore, it can be constituted by using inexpensive materials without using lithium, which is an expensive rare metal element, and thus the present invention is extremely useful industrially.

In addition, it is possible to easily produce an electrode in the air atmosphere without using a sputtering device or the like which requires large-scale vacuum equipment, and thus the present invention is extremely useful industrially.

[Reference Signs List]

100: Laminate
110: Cathode
111: Cathode active material layer
112: Cathode current collector
113: External terminal
120: Anode
121: Anode electrolyte layer
122: Anode current collector
123: External terminal
130: Solid electrolyte layer
200: Exterior body
200a: Opening portion
1000: All-solid state sodium secondary battery

**Claims**

1. An electrode active material for a sodium secondary battery, comprising:

    Na; and
    M1,
    wherein $M^1$ is one or more elements selected from the group consisting of Si, Ge, Sn, Pb, Sb, and Bi, and a molar ratio ($Na:M^1$) of Na to $M^1$ is t: 1, where t is a number of 2 or more and 3 or less.

2. The electrode active material for a sodium secondary battery according to Claim 1, wherein $M^1$ includes at least Sn.

3. The electrode active material for a sodium secondary battery according to Claim 2,

wherein t is a number of 2 or more and 2.5 or less.

4. The electrode active material for a sodium secondary battery according to Claim 2 or 3,
wherein the electrode active material for a sodium secondary battery has a peak in a range of $2\theta = 38°$ or more and $39°$ or less in a powder X-ray diffraction measurement using a CuKα ray.

5. An electrode mixture agent for a sodium secondary battery, comprising:

the electrode active material for a sodium secondary battery according to any one of Claims 1 to 4; and
an electrode forming agent.

6. The electrode mixture agent for a sodium secondary battery according to Claim 5, wherein the electrode mixture agent for a sodium secondary battery contains a carbon material.

7. An electrode for a sodium secondary battery, comprising the electrode active material for a sodium secondary battery according to any one of Claims 1 to 4.

8. An electrode for a sodium secondary battery, comprising:
the electrode mixture agent for a sodium secondary battery according to Claim 5 or 6.

9. A sodium secondary battery comprising:

a first electrode;
a second electrode; and
a non-aqueous electrolytic solution,
wherein the first electrode is the electrode according to Claim 7 or 8, and
the second electrode is an electrode containing, as an electrode active material, a sodium compound that enables doping and dedoping of metallic sodium, a sodium alloy, or a sodium ion.

10. The sodium secondary battery according to Claim 9,
wherein the sodium compound is an electrode active material consisting of an inorganic sodium compound.

11. The sodium secondary battery according to Claim 10,

wherein the inorganic sodium compound is an oxide represented by Formula (A),
$Na_xMO_2$ (A)
(in formula (A), M is one or more elements selected from the group consisting of Fe, Ni, Co, Mn, Cr, V, Ti, B, Al, Mg, and Si, and x is a number of more than 0 and 1.2 or less).

12. The electrode active material for a sodium secondary battery according to any one of Claims 1 to 4,
wherein the electrode active material for a sodium secondary battery is an anode active material for an all-solid state sodium secondary battery.

13. An all-solid state sodium secondary battery comprising:

a cathode;
an anode; and
a solid electrolyte layer sandwiched between the cathode and the anode,
wherein the solid electrolyte layer contains a first solid electrolyte,
the anode has an anode active material layer in contact with the solid electrolyte layer and a current collector on which the anode active material layer is laminated, and
the anode active material layer contains the electrode active material for a sodium secondary battery according to Claim 12.

14. The all-solid state sodium secondary battery according to Claim 13,
wherein the anode active material layer contains a second solid electrolyte.

15. The all-solid state sodium secondary battery according to Claim 14,

wherein the first solid electrolyte and the second solid electrolyte are the same material.

16. The all-solid state sodium secondary battery according to any one of Claims 13 to 15, wherein the first solid electrolyte is a NASICON type solid electrolyte.

FIG. 1

FIG. 2

FIG. 3

EP 4 129 532 A1

## INTERNATIONAL SEARCH REPORT

International application No.

PCT/JP2021/008062

### A. CLASSIFICATION OF SUBJECT MATTER

Int. Cl. B22F1/00(2006.01)i, C22C24/00(2006.01)i, H01M4/38(2006.01)i, H01M4/505(2010.01)i, H01M4/525(2010.01)i, H01M4/62(2006.01)i, H01M10/054(2010.01)i, H01M10/0562(2010.01)i
FI: H01M4/38 Z, H01M4/525, H01M4/505, H01M10/054, H01M10/0562, H01M4/62 Z, C22C24/00, B22F1/00 E, B22F1/00 R

According to International Patent Classification (IPC) or to both national classification and IPC

### B. FIELDS SEARCHED

Minimum documentation searched (classification system followed by classification symbols)

Int. Cl. B22F1/00, C22C24/00, H01M4/38, H01M4/505, H01M4/525, H01M4/62, H01M10/054, H01M10/0562

Documentation searched other than minimum documentation to the extent that such documents are included in the fields searched
Published examined utility model applications of Japan        1922-1996
Published unexamined utility model applications of Japan      1971-2021
Registered utility model specifications of Japan              1996-2021
Published registered utility model applications of Japan      1994-2021

Electronic data base consulted during the international search (name of data base and, where practicable, search terms used)
JSTPlus (JDreamIII); JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | DU, Zhijia et al. Investigation of the reversible sodiation of Sn foil by ex-situ X-ray diffractiometry and Mossbauer effect spectroscopy. Journal of Alloys and Compounds, 25 December 2014, vol. 617, pp. 271-276, https://doi.org/10.1016/j.jallcom.2014.07.209, Available online 7 August 2014 p. 272, right column, p275, left column, fig. 1, 6, 7 | 1-16 |
| Y | BAGGETO, Loic et al. The local atomic structure and chemical bonding in sodium tin phases. Journal of Materials Chemistry A Accepted Manuscript, 25 September 2014, Issue 44, 2, 1-51, https://doi.org/10.1039/C4TA04356A, in particular, 1. Introduction | 1-16 |

☒ Further documents are listed in the continuation of Box C.　　☒ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"　later document published after the international filing date or priority date and not in conflict with the application but cited to understand the principle or theory underlying the invention

"X"　document of particular relevance; the claimed invention cannot be considered novel or cannot be considered to involve an inventive step when the document is taken alone

"Y"　document of particular relevance; the claimed invention cannot be considered to involve an inventive step when the document is combined with one or more other such documents, such combination being obvious to a person skilled in the art

"&"　document member of the same patent family

| Date of the actual completion of the international search | Date of mailing of the international search report |
|---|---|
| 17.05.2021 | 25.05.2021 |
| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

34

**EP 4 129 532 A1**

**INTERNATIONAL SEARCH REPORT**

| International application No. |
|---|
| PCT/JP2021/008062 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2019/093273 A1 (OSAKA PREFECTURE UNIVERSITY) 16 May 2019, paragraph [0014] | 5-6, 8, 10-11, 13-16 |
| Y | WO 2019/140368 A1 (UNIVERSITY OF HOUSTON SYSTEM) 18 July 2019, paragraphs [0004], [0005], [0055] | 13-16 |
| P, A | CN 112310381 A (SHANDONG UNIVERSITY) 02 February 2021, paragraphs [0008], [0030]-[0035] | 1-16 |

Form PCT/ISA/210 (continuation of second sheet) (January 2015)

INTERNATIONAL SEARCH REPORT
Information on patent family members

International application No.

PCT/JP2021/008062

| Patent Documents referred to in the Report | Publication Date | Patent Family | Publication Date |
|---|---|---|---|
| WO 2019/093273 A1 | 16.05.2019 | (Family: none) | |
| WO 2019/140368 A1 | 18.07.2019 | (Family: none) | |
| CN 112310381 A | 02.02.2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020062871 A
- JP 2006216508 A
- WO 2016063877 A
- JP 2000030686 A
- JP H10324758 A

**Non-patent literature cited in the description**

- **WANG, J. W. ; LIU, X.; H. ; MAO, S. X. ; HUANG, J. Y.** Microstructural Evolution of Tin Nanoparticles During In Situ Sodium Insertion and Extraction. *Nano Lett.,* 2012, vol. 12, 5897-5902
- **W. HUME-ROTHERY.** *J. Chem. Soc.,* 1928, vol. 47